# EUROPEAN PATENT SPECIFICATION

(11) **EP 4 155 913 B1**
(45) Date of publication and mention of the grant of the patent: **02.07.2025**
(21) Application number: 22192249.5
(22) Date of filing: 25.08.2022
(51) Int. Cl.: G06F 9/30

(54) **APPARATUSES, METHODS, AND SYSTEMS FOR INSTRUCTIONS FOR STRUCTURED-SPARSE TILE MATRIX FMA**
VORRICHTUNGEN, VERFAHREN UND SYSTEME FÜR ANWEISUNGEN FÜR STRUKTURIERTE-SPARSE KACHELMATRIX-FMA
APPAREILS, PROCÉDÉS ET SYSTÈMES POUR DES INSTRUCTIONS POUR FMA DE MATRICE DE DALLE STRUCTURÉE ÉPARSE

(30) Priority: 25.09.2021 US 202117485363
(43) Date of publication of application: 29.03.2023
(73) Proprietor: INTEL Corporation, Santa Clara, CA 95054 (US)
(72) Inventor: ADELMAN, Menachem, 7179034 Modi'in (IL); VALENTINE, Robert, 36054 Kiryat Tivon (IL); BAUM, Dan, 34354 Haifa (IL); GRADSTEIN, Amit, Binyamina 3052316 (IL); RUBANOVICH, Simon, 34792 Haifa (IL); SHEMY, Regev, 28116 Kiryat Ata (IL); SPERBER, Zeev, 3092832 Zichron Yackov (IL); HEINECKE, Alexander, San Jose, CA, 95134 (US); HUGHES, Christopher, Santa Clara, CA, 95051 (US); GEORGANAS, Evangelos, San Jose, CA, 95129 (US); CHARNEY, Mark, Lexington, MA, 02421 (US); NARKIS, Arik, 36083 Kiryat Tivon (IL); RAPPOPORT, Rinat, 34657 Haifa (IL); ZIV, Barukh, 32982 Haifa (IL); POLLAK, Yaroslav, 3604618 Kiryat Tivon (IL); JAIN, Nilesh, Porland, OR, 97229 (US); AKHAURI, Yash, 201305 Uttar Pradesh (IN); GANESH, Brinda, Portland, OR, 97231 (US); POORNACHANDRAN, Rajesh, Portland, OR, 97229 (US); BOUDOUKH, Guy, 4703458 Ramat Hasharon (IL)
(74) Representative: Samson & Partner Patentanwälte mbB

(56) References cited:
- WO-A1-2020/190809
- US-A1- 2019 042 250
- US-A1- 2019 079 768
- US-A1- 2021 081 201

## Description

### TECHNICAL FIELD

The disclosure relates generally to computer processor architecture, and, more specifically, to systems and methods for performing 16-bit floating-point matrix dot product instructions.

### BACKGROUND

Matrices are increasingly important in many computing tasks such as machine learning and other bulk data processing. Deep Learning is a class of machine learning algorithms. Deep learning architectures, such as deep neural networks, have been applied to fields including computer vision, speech recognition, natural language processing, audio recognition, social network filtering, machine translation, bioinformatics and drug design.

Inference and training, two tools used for deep learning, are tending towards low precision arithmetic. Maximizing throughput of deep learning algorithms and computations may assist in meeting the needs of deep learning processors, for example, those performing deep learning in a data center.

Matrix-matrix multiplication (a.k.a., GEMM or General Matrix Multiplication) is a common compute-heavy operation on modern processors. Special hardware for matrix multiplication (e.g., GEMM) is a good option for improving the peak compute (and energy efficiency) of certain applications, such as deep learning.

Some of these applications, including deep learning, can operate on input data elements with relatively few bits without losing accuracy, as long as the output elements have enough bits (i.e., more than the inputs).
US 20119/079768 A1 shows computer processor architecture, and, more specifically, systems and methods for performing 16-bit floating-point matrix dot product instructions.
WO 2020/190809 A1 shows software, firmware, and hardware logic that provides techniques to perform arithmetic on sparse data via a systolic processing unit.
US 2019/042250 A1 shows computer processor architecture, and, more specifically, to a variable format, variable sparsity matrix multiplication instruction.
US 2021/081201A1 shows an apparatus to facilitate utilizing structured sparsity in systolic arrays
The subject-matter provided by the present invention is defined in independent claims, while preferred embodiments of the present invention are defined in dependent claims.

### BRIEF DESCRIPTION OF THE DRAWINGS

The present disclosure is illustrated by way of example and not limitation in the figures of the accompanying drawings, in which like references indicate similar elements and in which:
**FIG. 1A** illustrates an embodiment of configured tiles;
**FIG. 1B** illustrates an embodiment of configured tiles;
**FIG. 2** illustrates several examples of matrix storage;
**FIG. 3** illustrates an embodiment of a system utilizing a matrix (tile) operations accelerator;
**FIGS. 4 and 5** show different embodiments of how memory is shared using a matrix operations accelerator;
**FIG. 6** illustrates an embodiment of matrix multiply accumulate operation using tiles ("TMMA");
**FIG. 7** illustrates an embodiment of a subset of the execution of an iteration of a chained fused multiply accumulate instruction;
**FIG. 8** illustrates an embodiment of a subset of the execution of an iteration of a chained fused multiply accumulate instruction;
**FIG. 9** illustrates an embodiment of a subset of the execution of an iteration of a chained fused multiply accumulate instruction;
**FIG. 10** illustrates an embodiment of a subset of the execution of an iteration of chained fused multiply accumulate instruction;
**FIG. 11** illustrates power-of-two sized SIMD implementations wherein the accumulators use input sizes that are larger than the inputs to the multipliers according to an embodiment;
**FIG. 12** illustrates an embodiment of a system utilizing matrix operations circuitry;
**FIG. 13** illustrates an embodiment of a processor core pipeline supporting matrix operations using tiles;
**FIG. 14** illustrates an embodiment of a processor core pipeline supporting matrix operations using tiles;
**FIG. 15** illustrates an example of a matrix expressed in row major format and column major format;
**FIG. 16** illustrates an example of usage of matrices (tiles);
**FIG. 17** illustrates an embodiment a method of usage of matrices (tiles);
**FIG. 18** illustrates support for configuration of the usage of tiles according to an embodiment;
**FIG. 19** illustrates an embodiment of a description of the matrices (tiles) to be supported;
**FIGS. 20(A)****-(D)** illustrate examples of register(s);
**FIG. 21** illustrates examples of hardware support for executing sparsity FMA instructions;
**FIG. 22** illustrates examples of an FMA using BF16 or FP data elements;
**FIG. 23** illustrates examples of an FMA using INT8 data elements;
**FIG. 24** illustrates examples of sparsity control tiles;
**FIG. 25** illustrates examples of a method performed by a processor to process a sparsity FMA instruction;
**FIG. 26** illustrates examples of a method performed by a processor to process a sparsity FMA instruction;
**FIG. 27** illustrates exemplary pseudocode for a TDPS[SS, SU,US,SS]BD instruction;
**FIG. 28** illustrates exemplary pseudocode for a TDPSBF16PS instruction;
**FIG. 29** illustrates exemplary pseudocode for a TDPSFP16PS instruction;
**FIG. 30** illustrates examples of hardware to process an instance of a single instruction such as one of the sparsity FMA instructions;
**FIG. 31** illustrates examples of an exemplary system;
**FIG. 32** illustrates a block diagram of examples of a processor that may have more than one core, may have an integrated memory controller, and may have integrated graphics;
**FIG. 33(A)** is a block diagram illustrating both an exemplary in-order pipeline and an exemplary register renaming, out-of-order issue/execution pipeline according to examples;
**FIG. 33(B)** is a block diagram illustrating both an exemplary embodiment of an in-order architecture core and an exemplary register renaming, out-of-order issue/execution architecture core to be included in a processor according to examples;
**FIG. 34** illustrates examples of execution unit(s) circuitry, such as execution unit(s) circuitry of FIG. 33(B);
**FIG. 35** is a block diagram of a register architecture according to some examples;
**FIG. 36** illustrates examples of an instruction format;
**FIG. 37** illustrates examples of an addressing field;
**FIG. 38** illustrates examples of a first prefix;
**FIGS. 39(A)****-(D)** illustrate examples of how the R, X, and B fields of the first prefix 3601(A) are used;
**FIGS. 40(A)****-(B)** illustrate examples of a second prefix;
**FIG. 41** illustrates examples of a third prefix; and
**FIG. 42** illustrates a block diagram contrasting the use of a software instruction converter to convert binary instructions in a source instruction set to binary instructions in a target instruction set according to examples.

### DETAILED DESCRIPTION

In the following description, numerous specific details are set forth. However, it is understood that embodiments may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In many mainstream processors, handling matrices is a difficult and/or instruction intensive task. For example, rows of a matrix could be put into a plurality of packed data (e.g., SIMD or vector) registers and then operated on individually. For example, an add two 8x2 matrices may require a load or gather into four packed data registers depending upon data sizes. Then a first add of packed data registers corresponding to a first row from each matrix is performed and a second add of packed data registers corresponding to a second row from each matrix is performed. Then the resulting packed data registers are scattered back to memory. While for small matrices this scenario may be acceptable, it is often not acceptable with larger matrices.

### DISCUSSION

Described herein are mechanisms to support matrix operations in computer hardware such as central processing units (CPUs), graphic processing units (GPUs), and accelerators. The matrix operations utilize 2-dimensional (2-D) data structures representing one or more packed regions of memory such as registers. Throughout this description, these 2-D data structures are referred to as tiles. Note that a matrix may be smaller than a tile (use less than all of a tile) or utilize a plurality of tiles (the matrix is larger than the size of any one tile). Throughout the description, matrix (tile) language is used to indicate operations performed using tiles that impact a matrix; whether or not that matrix is larger than any one tile is not typically relevant.

Each tile may be acted upon by different operations such as those that are detailed herein and include, but are not limited to: matrix (tile) multiplication, tile add, tile subtract, tile diagonal, tile zero, tile transform, tile dot product, tile broadcast, tile row broadcast, tile column broadcast, tile multiplication, tile multiplication and accumulation, tile move, etc. Additionally, support for operators such as the use of a scale and/or bias may be used with these operations or in support of non-numeric applications in the future, for instance, OpenCL "local memory," data compression/decompression, etc.

Portions of storage (such as memory (non-volatile and volatile), registers, cache, etc.) are arranged into tiles of different horizontal and vertical dimensions. For example, a tile may have horizontal dimension of 4 (e.g., four rows of a matrix) and a vertical dimension of 8 (e.g., 8 columns of the matrix). Typically, the horizontal dimension is related to element sizes (e.g., 2-, 4-, 8-, 16-, 32-, 64-, 128-bit, etc.). Multiple datatypes (single precision floating-point, double precision floating-point, integer, etc.) may be supported.

### EXEMPLARY USAGE OF CONFIGURED TILES

In some embodiments, tile parameters can be configured. For example, a given tile may be configured to provide tile options. Exemplary tile options include but are not limited to: a number of rows of the tile, a number of columns of the tile, whether the tile is VALID, and/or whether the tile consists of a PAIR of equal-sized tiles.

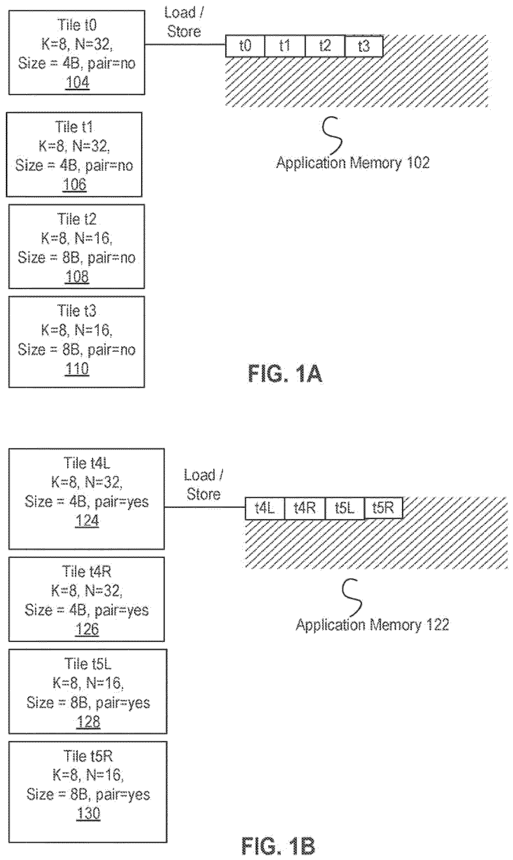

**FIG. 1A** illustrates an embodiment of configured tiles. As shown, 4 kB of application memory 102 have stored thereon 4 1kB titles, tile t0 104, tile t1 106, tile t2 108, and tile t3 110. In this example, the 4 tiles do not consist of pairs, and each have elements arranged in rows and columns. Tile t0 104 and tile t1 106 have K rows and N columns of 4-byte elements (e.g., single precision data), where K equals 8 and N=32. Tile t2 108 and tile t3 110 have K rows and N/2 columns of 8-byte elements (e.g., double precision data). As the double precision operands are twice the width of single precision, this configuration is consistent with a palette, used to provide tile options, supplying at least 4 names with total storage of at least 4 kB. In operation, the tiles can be loaded from and stored to memory using load and store operations. Depending upon the instruction encoding scheme used, the amount of available application memory, as well as the size, number, and configuration of available tiles varies.

**FIG. 1B** illustrates an embodiment of configured tiles. As shown, 4 kB of application memory 122 have stored thereon 2 pairs of 1kB-tiles, the first pair being tile t4L 124 and tile t4R 126, and the second pair being tile t5L 128 and tile t5R 130. As shown the pairs of tiles are divided into a left tile and a right tile. In other embodiments, the pair of tiles are divided into an even tile and an odd tile. In this example, the 4 tiles each have elements arranged in rows and columns. Tile t4L 124 and tile t4R 126 have K rows and N columns of 4-byte elements (e.g., single precision floating-point data), where K equals 8 and N equals 32. Tile t5L 128 and tile t5R 130 have K rows and N/2 columns of 8-byte elements (e.g., double precision floating-point data). As the double precision operands are twice the width of single precision, this configuration is consistent with a palette, used to provide tile options, supplying at least 2 names with total storage of at least 4 kB. The four tiles of **FIG. 1A** use 4 names, each naming a 1 kB tile, whereas the 2 pairs of tiles in **FIG. 1B** can use 2 names to specify the paired tiles. In some embodiments, tile instructions accept a name of a paired tile as an operand. In operation, the tiles can be loaded from and stored to memory using load and store operations. Depending upon the instruction encoding scheme used, the amount of available application memory, as well as the size, number, and configuration of available tiles varies.

In some embodiments, tile parameters are definable. For example, a "palette" is used to provide tile options. Exemplary options include, but are not limited to: the number of tile names, the number of bytes in a row of storage, the number of rows and columns in a tile, etc. For example, a maximum "height" (number of rows) of a tile may be defined as:
Tile Max Rows = Architected Storage/(The Number of Palette Names * The Number of Bytes per row).

As such, an application can be written such that a fixed usage of names will be able to take advantage of different storage sizes across implementations.

Configuration of tiles is done using a matrix (tile) configuration ("TILECONFIG") instruction, where a particular tile usage is defined in a selected palette. This declaration includes the number of tile names to be used, the requested number of rows and columns per name (tile), and, in some embodiments, the requested datatype of each tile. In some embodiments, consistency checks are performed during the execution of a TILECONFIG instruction to determine that it matches the restrictions of the palette entry.

### EXEMPLARY TILE STORAGE TYPES

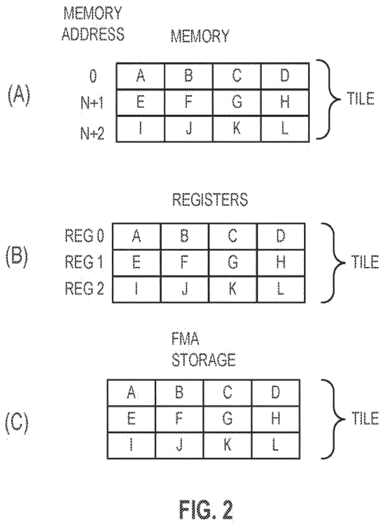

**FIG. 2** illustrates several examples of matrix storage. In (A), a tile is stored in memory. As shown, each "row" consists of four packed data elements. To get to the next "row," a stride value is used. Note that rows may be consecutively stored in memory. Strided memory accesses allow for access of one row to then next when the tile storage does not map the underlying memory array row width.

Tile loads from memory and stores to memory are typically strided accesses from the application memory to packed rows of data. Exemplary TILELOAD and TILESTORE instructions, or other instruction references to application memory as a TILE operand in load-op instructions, are, in some embodiments, restartable to handle (up to) 2*rows of page faults, unmasked floating-point exceptions, and/or interrupts per instruction.

In (B), a matrix is stored in a tile comprised of a plurality of registers such as packed data registers (single instruction, multiple data (SIMD) or vector registers). In this example, the tile is overlaid on three physical registers. Typically, consecutive registers are used, however, this need not be the case.

In (C), a matrix is stored in a tile in non-register storage accessible to a fused multiply accumulate (FMA) circuit used in tile operations. This storage may be inside of an FMA, or adjacent to it. Additionally, in some embodiments, discussed below, the storage may be for a data element and not an entire row or tile.

The supported parameters for the TMMA architecture are reported via CPUID. In some embodiments, the list of information includes a maximum height and a maximum SIMD dimension. Configuring the TMMA architecture requires specifying the dimensions for each tile, the element size for each tile and the palette identifier. This configuration is done by executing the TILECONFIG instruction.

Successful execution of a TILECONFIG instruction enables subsequent TILE operators. A TILERELEASEALL instruction clears the tile configuration and disables the TILE operations (until the next TILECONFIG instructions executes). In some embodiments, XSAVE, XSTORE, etc. are used in context switching using tiles. In some embodiments, 2 XCR0 bits are used in XSAVE, one for TILECONFIG metadata and one bit corresponding to actual tile payload data.

TILECONFIG not only configures the tile usage, but also sets a state variable indicating that the program is in a region of code with tiles configured. An implementation may enumerate restrictions on other instructions that can be used with a tile region such as no usage of an existing register set, etc.

Exiting a tile region is typically done with the TILERELEASEALL instruction. It takes no parameters and swiftly invalidates all tiles (indicating that the data no longer needs any saving or restoring) and clears the internal state corresponding to being in a tile region.

In some embodiments, tile operations will zero any rows and any columns beyond the dimensions specified by the tile configuration. For example, tile operations will zero the data beyond the configured number of columns (factoring in the size of the elements) as each row is written. For example, with 64-byte rows and a tile configured with 10 rows and 12 columns, an operation writing FP32 elements would write each of the first 10 rows with 12*4 bytes with output/result data and zero the remaining 4*4 bytes in each row. Tile operations also fully zero any rows after the first 10 configured rows. When using 1K tile with 64-byte rows, there would be 16 rows, so in this example, the last 6 rows would also be zeroed.

In some embodiments, a context restore instruction (e.g., XRSTOR), when loading data, enforces that the data beyond the configured rows for a tile will be maintained as zero. If there is no valid configuration, all rows are zeroed. XRSTOR of tile data can load garbage in the columns beyond those configured. It should not be possible for XRSTOR to clear beyond the number of columns configured because there is not an element width associated with the tile configuration.

Context save (e.g., XSAVE) exposes the entire TILE storage area when writing it to memory. If XRSTOR loaded garbage data into the rightmost part of a tile, that data will be saved by XSAVE. XSAVE will write zeros for rows beyond the number specified for each tile.

In some embodiments, tile instructions are restartable. The operations that access memory allow restart after page faults. The computational instructions that deal with floating-point operations also allow for unmasked floating-point exceptions, with the masking of the exceptions controlled by a control and/or status register.

To support restarting instructions after these events, the instructions store information in the start registers detailed below.

### MATRIX (TILE) OPERATION SYSTEMS

### EXEMPLARY HARDWARE SUPPORT

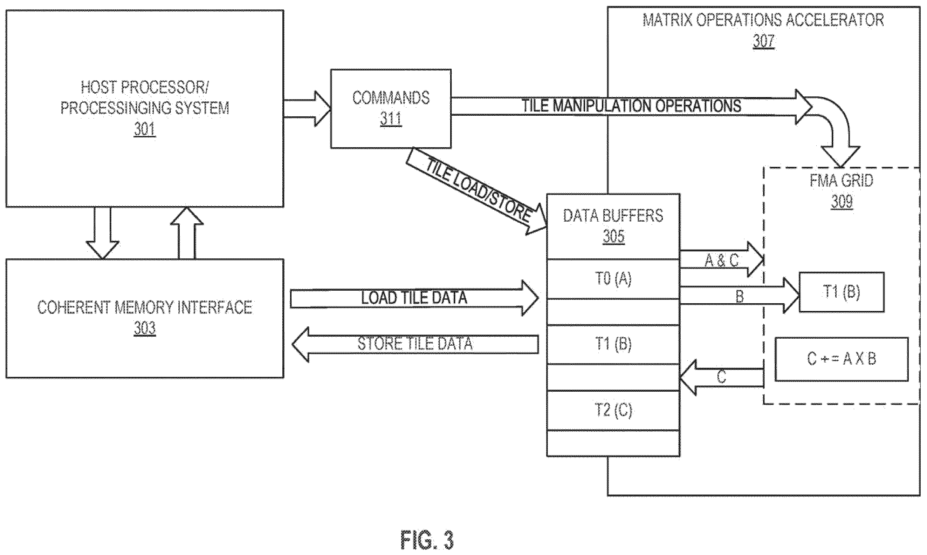

**FIG. 3** illustrates an embodiment of a system utilizing a matrix (tile) operations accelerator. In this illustration, a host processor/processing system 301 communicates commands 311 (e.g., matrix manipulation operations such as arithmetic or matrix manipulation operations, or load and store operations) to a matrix operations accelerator 307. However, this is shown this way for discussion purposes only. As detailed later, this accelerator 307 may be a part of a processing core. Typically, commands 311 that are tile manipulation operator instructions will refer to tiles as register-register ("reg-reg") or register-memory ("reg-mem") format. Other commands such as TILESTORE, TILELOAD, TILECONFIG, etc., do not perform data operations on a tile. Commands may be decoded instructions (e.g., micro-ops) or macroinstructions for the accelerator 307 to handle.

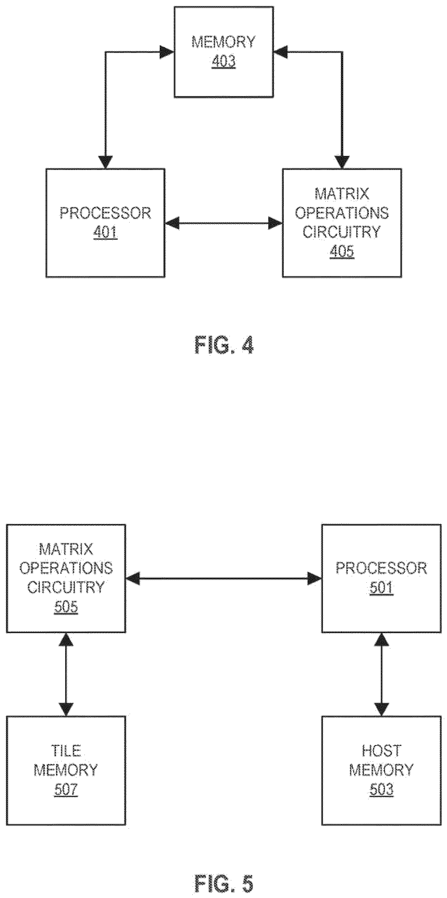

In this example, a coherent memory interface 303 is coupled to the host processor/processing system 301 and matrix operations accelerator 307 such that they can share memory. **FIGS. 4 and 5** show different embodiments of how memory is shared using a matrix operations accelerator. As shown in **FIG. 4****,** the host processor 401 and matrix operations accelerator circuitry 405 share the same memory 403. **FIG. 5** illustrates an embodiment where the host processor 501 and matrix operations accelerator 505 do not share memory but can access each other's memory. For example, processor 501 can access tile memory 507 and utilize its host memory 503 as normal. Similarly, the matrix operations accelerator 505 can access host memory 503, but more typically uses its own memory 507. Note these memories may be of different types.

In some embodiments, tiles are supported using an overlay over physical registers. For example, a tile may utilize 16 1,024-bit registers, 32 512-bit registers, etc. depending on the implementation. In some embodiments, the matrix operations utilize 2-dimensional (2-D) data structures representing one or more packed regions of memory such as registers. Throughout this description, these 2-D data structures are referred to as tiles or tile registers.

In some embodiments, the matrix operations accelerator 307 includes a plurality of FMAs 309 coupled to data buffers 305 (in some implementations, one or more of these buffers 305 are stored in the FMAs of the grid as shown). The data buffers 305 buffer tiles loaded from memory and/or tiles to be stored to memory (e.g., using a tileload or tilestore instruction). Data buffers may be, for example, a plurality of registers. Typically, these FMAs are arranged as a grid of chained FMAs 309 which are able to read and write tiles. In this example, the matrix operations accelerator 307 is to perform a matrix multiply operation using tiles T0, T1, and T2. At least one of tiles is housed in the FMA grid 309. In some embodiments, all tiles in an operation are stored in the FMA grid 309. In other embodiments, only a subset is stored in the FMA grid 309. As shown, T1 is housed and T0 and T2 are not. Note that A, B, and C refer to the matrices of these tiles which may or may not take up the entire space of the tile.

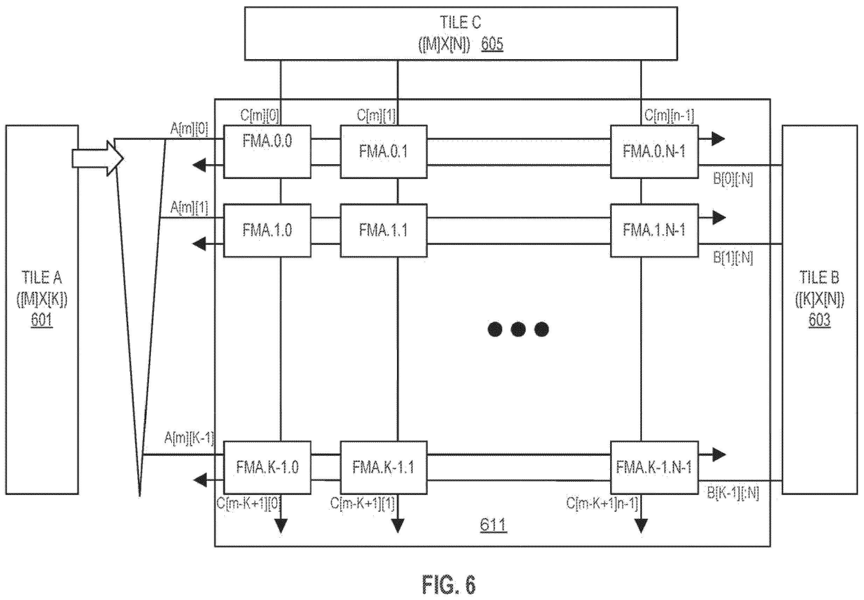

**FIG. 6** illustrates an embodiment of matrix multiply accumulate operation using tiles ("TMMA").

The number of rows in the matrix (TILE A 601) matches the number of serial (chained) FMAs comprising the computation's latency. An implementation is free to recirculate on a grid of smaller height, but the computation remains the same.

The source/destination vector comes from a tile of N rows (TILE C 605) and the grid of FMAs 611 performs N vector-matrix operations resulting in a complete instruction performing a matrix multiplication of tiles. Tile B 603 is the other vector source and supplies "broadcast" terms to the FMAs in each stage.

In operation, in some embodiments, the elements of matrix B (stored in a tile B 603) are spread across the rectangular grid of FMAs. Matrix B (stored in tile A 601) has its elements of a row transformed to match up with the columnar dimension of the rectangular grid of FMAs. At each FMA in the grid, an element of A and B are multiplied and added to the incoming summand (from above in the FIG.) and the outgoing sum is passed to the next row of FMAs (or the final output).

The latency of a single step is proportional to K (row height of matrix B) and dependent TMMAs typically have enough source-destination rows (either in a single tile or across tile) to hide that latency. An implementation may also split the SIMD (packed data element) dimension M (row height of matrix A) across time steps, but this simply changes the constant that K is multiplied by. When a program specifies a smaller K than the maximum enumerated by the TMACC, an implementation is free to implement this with "masking" or "early outs."

The latency of an entire TMMA is proportional to N*K. The repeat rate is proportional to N. The number of MACs per TMMA instruction is N*K*M.

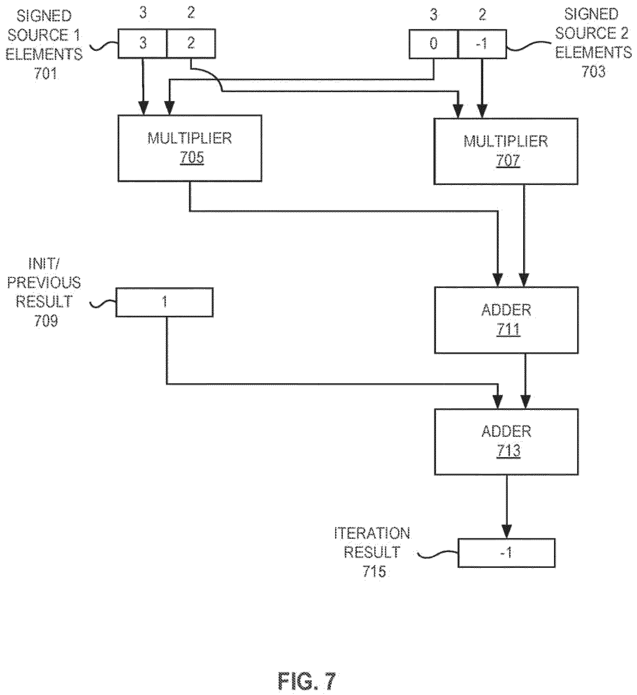

**FIG. 7** illustrates an embodiment of a subset of the execution of an iteration of a chained fused multiply accumulate instruction. In particular, this illustrates execution circuitry of an iteration of one packed data element position of the destination. In this embodiment, the chained fused multiply accumulate is operating on signed sources wherein the accumulator is 2x the input data size.

A first signed source (source 1 701) and a second signed source (source 2 703) each have four packed data elements. Each of these packed data elements stores signed data such as floating-point data. A third signed source (source 3 709) has two packed data elements, each of which stores signed data. The sizes of the first and second signed sources 701 and 703 are half that of the third signed source (initial value or previous result) 709. For example, the first and second signed sources 701 and 703 could have 32-bit packed data elements (e.g., single precision floating-point) while the third signed source 709 could have 64-bit packed data elements (e.g., double precision floating-point).

In this illustration, only the two most significant packed data element positions of the first and second signed sources 701 and 703 and the most significant packed data element position of the third signed source 709 are shown. Of course, the other packed data element positions would also be processed.

As illustrated, packed data elements are processed in pairs. For example, the data of the most significant packed data element positions of the first and second signed sources 701 and 703 are multiplied using a multiplier circuit 705, and the data from second most significant packed data element positions of the first and second signed sources 701 and 703 are multiplied using a multiplier circuit 707. In some embodiments, these multiplier circuits 705 and 707 are reused for other packed data elements positions. In other embodiments, additional multiplier circuits are used so that the packed data elements are processed in parallel. In some contexts, parallel execution is done using lanes that are the size of the signed third source 709. The results of each of the multiplications are added using addition circuitry 711.

The result of the addition of the results of the multiplications is added to the data from most significant packed data element position of the signed source 3 709 (using a different adder 713 or the same adder 711).

Finally, the result of the second addition is either stored into the signed destination 715 in a packed data element position that corresponds to the packed data element position used from the signed third source 709 or passed on to the next iteration if there is one. In some embodiments, a writemask is applied to this storage such that if a corresponding writemask (bit) is set, the storage happens, and, if not set, the storage does not happen.

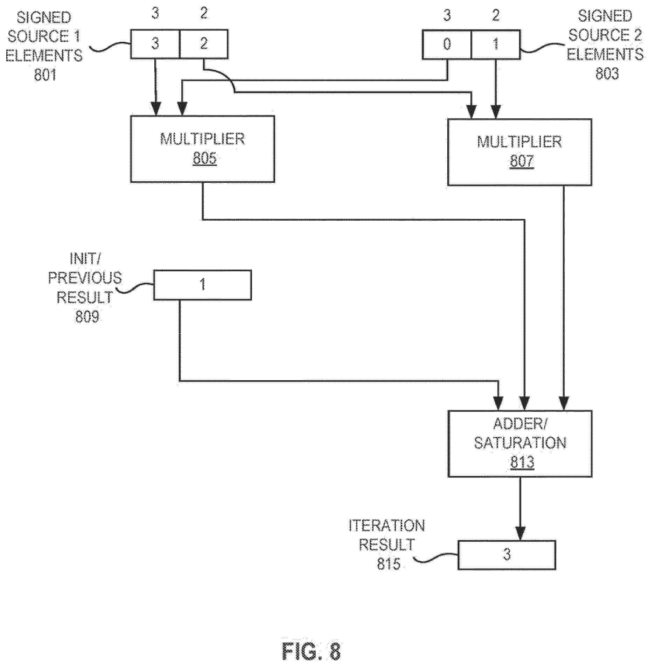

**FIG. 8** illustrates an embodiment of a subset of the execution of an iteration of a chained fused multiply accumulate instruction. In particular, this illustrates execution circuitry of an iteration of one packed data element position of the destination. In this embodiment, the chained fused multiply accumulate is operating on signed sources wherein the accumulator is 2x the input data size.

A first signed source (source 1801) and a second signed source (source 2 803) each have four packed data elements. Each of these packed data elements stores signed data such as integer data. A third signed source (source 3 809) has two packed data elements, each of which stores signed data. The sizes of the first and second signed sources 801 and 803 are half that of the third signed source 809. For example, the first and second signed sources 801 and 803 could have 32-bit packed data elements (e.g., single precision floating-point) the third signed source 809 could have 64-bit packed data elements (e.g., double precision floating-point).

In this illustration, only the two most significant packed data element positions of the first and second signed sources 801 and 803 and the most significant packed data element position of the third signed source 809 are shown. Of course, the other packed data element positions would also be processed.

As illustrated, packed data elements are processed in pairs. For example, the data of the most significant packed data element positions of the first and second signed sources 801 and 803 are multiplied using a multiplier circuit 805, and the data from second most significant packed data element positions of the first and second signed sources 801 and 803 are multiplied using a multiplier circuit 807.In some embodiments, multiplier circuits 805 and 807 perform the multiplications with infinite precision without saturation and use adder/saturation circuitry 813 to saturate the results of the accumulation to plus or minus infinity in case of an overflow and to zero in case of any underflow. In other embodiments, multiplier circuits 805 and 807 perform the saturation themselves. In some embodiments, these multiplier circuits 805 and 807 are reused for other packed data element positions. In other embodiments, additional multiplier circuits are used so that the packed data elements are processed in parallel. In some contexts, parallel execution is done using lanes that are the size of the signed third source (initial value or previous iteration result) 809. The results of each of the multiplications are added to the signed third source 809 using addition/saturation circuitry 813.

Addition/saturation (accumulator) circuitry 813 preserves a sign of an operand when the addition results in a value that is too big. In particular, saturation evaluation occurs on the infinite precision result between the multi-way-add and the write to the destination or next iteration. When the accumulator 813 is floating-point and the input terms are integer, the sum of products and the floating-point accumulator input value are turned into infinite precision values (fixed point numbers of hundreds of bits), the addition of the multiplication results and the third input is performed, and a single rounding to the actual accumulator type is performed.

Unsigned saturation means the output values are limited to a maximum unsigned number for that element width (all 1s). Signed saturation means a value is limited to the be in the range between a minimum negative number and a max positive number for that element width (for bytes for example, the range is from -128 (= - 2^7) to 127(=2^7-1)).

The result of the addition and saturation check is stored into the signed result 815 in a packed data element position that corresponds to the packed data element position used from the signed third source 809 or passed on to the next iteration if there is one. In some embodiments, a writemask is applied to this storage such that if a corresponding writemask (bit) is set, the storage happens, and, if not set, the storage does not happen.

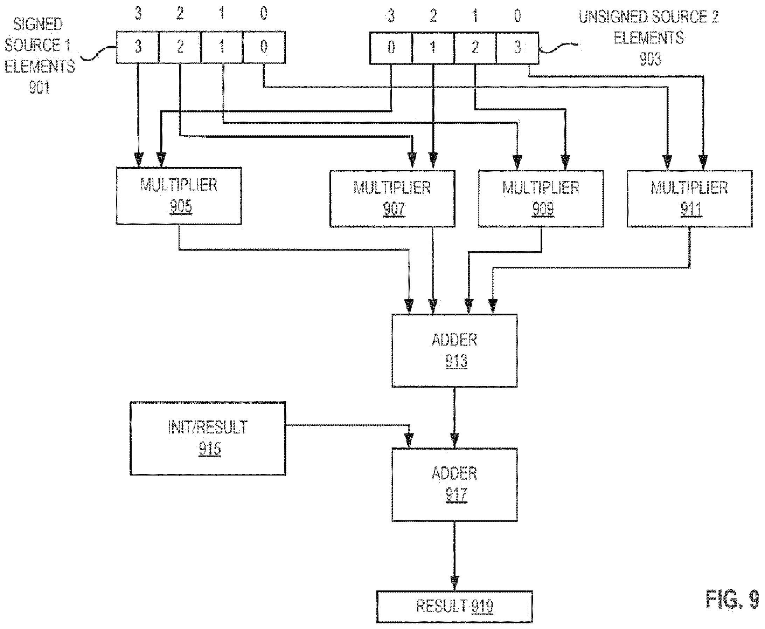

**FIG. 9** illustrates an embodiment of a subset of the execution of an iteration of a chained fused multiply accumulate instruction. In particular, this illustrates execution circuitry of an iteration of one packed data element position of the destination. In this embodiment, the chained fused multiply accumulate is operating on a signed source and an unsigned source wherein the accumulator is 4x the input data size.

A first signed source (source 1901) and a second unsigned source (source 2 903) each have four packed data elements. Each of these packed data elements has data such as floating-point or integer data. A third signed source (initial value or result 915) has a packed data element of which stores signed data. The sizes of the first and second sources 901 and 903 are a quarter of the third signed source 915. For example, the first and second sources 901 and 903 could have 16-bit packed data elements (e.g., word) and the third signed source 915 could have 64-bit packed data elements (e.g., double precision floating-point or 64-bit integer).

In this illustration, the four most significant packed data element positions of the first and second sources 901 and 903 and the most significant packed data element position of the third signed source 915 are shown. Of course, other packed data element positions would also be processed if there are any.

As illustrated, packed data elements are processed in quadruplets. For example, the data of the most significant packed data element positions of the first and second sources 901 and 903 are multiplied using a multiplier circuit 905, data from second most significant packed data element positions of the first and second sources 901 and 903 are multiplied using a multiplier circuit 907, data from third most significant packed data element positions of the first and second sources 901 and 903 are multiplied using a multiplier circuit 909, and data from the least significant packed data element positions of the first and second sources 901 and 903 are multiplied using a multiplier circuit 911. In some embodiments, the signed packed data elements of the first source 901 are sign extended and the unsigned packed data elements of the second source 903 are zero extended prior to the multiplications.

In some embodiments, these multiplier circuits 905-911 are reused for other packed data elements positions. In other embodiments, additional multiplier circuits are used so that the packed data elements are processed in parallel. In some contexts, parallel execution is done using lanes that are the size of the signed third source 915. The results of each of the multiplications are added using addition circuitry 913.

The result of the addition of the results of the multiplications is added to the data from most significant packed data element position of the signed source 3 915 (using a different adder 917 or the same adder 913).

Finally, the result 919 of the second addition is either stored into the signed destination in a packed data element position that corresponds to the packed data element position used from the signed third source 915 or passed to the next iteration. In some embodiments, a writemask is applied to this storage such that if a corresponding writemask (bit) is set, the storage happens, and, if not set, the storage does not happen.

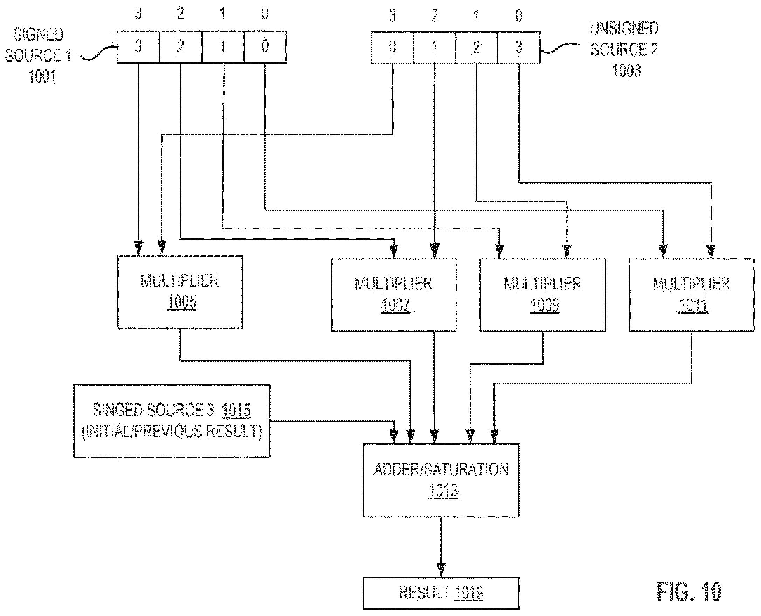

**FIG. 10** illustrates an embodiment of a subset of the execution of an iteration of chained fused multiply accumulate instruction. In particular, this illustrates execution circuitry of an iteration of one packed data element position of the destination. In this embodiment, the chained fused multiply accumulate is operating on a signed source and an unsigned source wherein the accumulator is 4x the input data size.

A first signed source 1001 and a second unsigned source 1003 each have four packed data elements. Each of these packed data elements stores data such as floating-point or integer data. A third signed source 1015 (initial or previous result) has a packed data element of which stores signed data. The sizes of the first and second sources are a quarter of the third signed source 1015 (initial or previous result). For example, the first and second sources could have 16-bit packed data elements (e.g., word) and the third signed source 1015 (initial or previous result) could have 64-bit packed data elements (e.g., double precision floating-point or 64-bit integer).

In this illustration, the four most significant packed data element positions of the first signed source 1001 and the second unsigned source 1003 and the most significant packed data element position of the third signed source 1015 are shown. Of course, other packed data element positions would also be processed if there are any.

As illustrated, packed data elements are processed in quadruplets. For example, the data of the most significant packed data element positions of the first signed source 1001 and the second unsigned source 1003 are multiplied using a multiplier circuit 1005, data from second most significant packed data element positions of the first signed source 1001 and the second unsigned source 1003 are multiplied using a multiplier circuit 1007, data from third most significant packed data element positions of the first signed source 1001 and the second unsigned source 1003 are multiplied using a multiplier circuit 1009, and data from the least significant packed data element positions of the first signed source 1001 and the second unsigned source 1003 are multiplied using a multiplier circuit 1011. In some embodiments, the signed packed data elements of the first signed source 1001 are sign extended and the unsigned packed data elements of the second unsigned source 1003 are zero extended prior to the multiplications.

In some embodiments, these multiplier circuits 1005-1011 are reused for other packed data elements positions. In other embodiments, additional multiplier circuits are used so that the packed data elements are processed in parallel. In some contexts, parallel execution is done using lanes that are the size of third signed source 1015 (initial or previous result). The result of the addition of the results of the multiplications is added to the data from most significant packed data element position of third signed source 1015 (initial or previous result) using adder/saturation 1013 circuitry.

Addition/saturation (accumulator) circuitry 1013 preserves a sign of an operand when the addition results in a value that is too big or too small for signed saturation. In particular, saturation evaluation occurs on the infinite precision result between the multi-way-add and the write to the destination. When the accumulator 1013 is floating-point and the input terms are integer, the sum of products and the floating-point accumulator input value are turned into infinite precision values (fixed point numbers of hundreds of bits), the addition of the multiplication results and the third input is performed, and a single rounding to the actual accumulator type is performed.

The result 1019 of the addition and saturation check is stored into the signed destination in a packed data element position that corresponds to the packed data element position used from third signed source 1015 (initial or previous result) or passed to the next iteration. In some embodiments, a writemask is applied to this storage such that if a corresponding writemask (bit) is set, the storage happens, and, if not set, the storage does not happen.

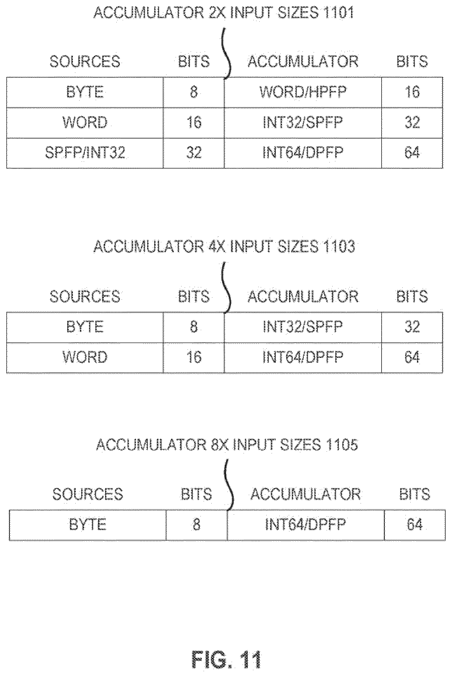

**FIG. 11** illustrates power-of-two sized SIMD implementations wherein the accumulators use input sizes that are larger than the inputs to the multipliers according to an embodiment. Note the source (to the multipliers) and accumulator values may be signed or unsigned values. For an accumulator having 2X input sizes (in other words, the accumulator input value is twice the size of the packed data element sizes of the sources), table 1101 illustrates different configurations. For byte sized sources, the accumulator uses word or half-precision floating-point (HPFP) values that are 16-bit in size. For word sized sources, the accumulator uses 32-bit integer or single-precision floating-point (SPFP) values that are 32-bit in size. For SPFP or 32-bit integer sized sources, the accumulator uses 64-intenger or double-precision floating-point (DPFP) values that are 64-bit in size.

For an accumulator having 4X input sizes (in other words, the accumulator input value is four times the size of the packed data element sizes of the sources), table 1103 illustrates different configurations. For byte sized sources, the accumulator uses 32-bit integer or single-precision floating-point (SPFP) values that are 32-bit in size. For word sized sources, the accumulator uses 64-bit integer or double-precision floating-point (DPFP) values that are 64-bit in size in some embodiments.

For an accumulator having 8X input sizes (in other words, the accumulator input value is eight times the size of the packed data element sizes of the sources), table 1105 illustrates a configuration. For byte sized sources, the accumulator uses 64-bit integer.

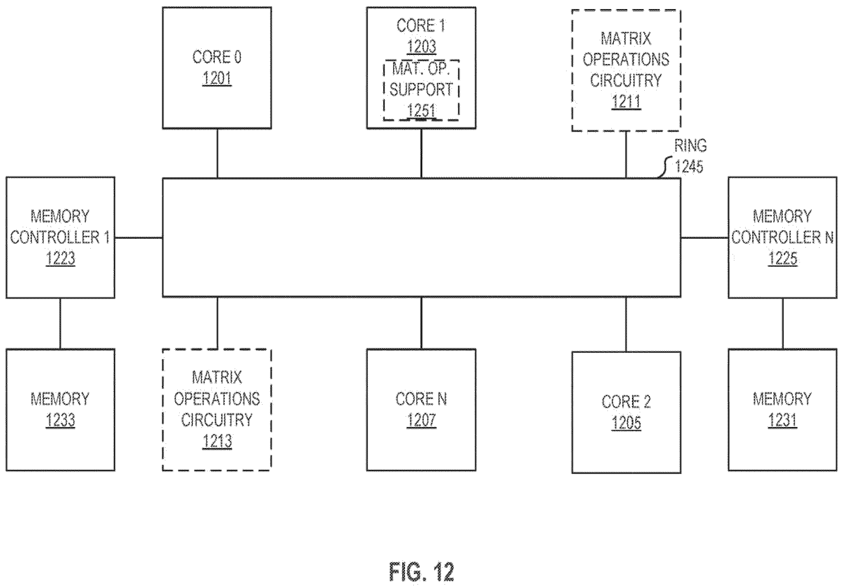

As hinted at earlier, matrix operations circuitry may be included in a core, or as an external accelerator. **FIG. 12** illustrates an embodiment of a system utilizing matrix operations circuitry. In this illustration, multiple entities are coupled with a ring interconnect 1245.

A plurality of cores, core 0 1201, core 1 1203, core 2 1205, and core N 1207 provide non-tile-based instruction support. In some embodiments, matrix operations circuitry 1251 is provided in a core 1203, and in other embodiments matrix operations circuitries 1211 and 1213 are accessible on the ring interconnect 1245.

Additionally, one or more memory controllers 1223-1225 are provided to communicate with memory 1233 and 1231 on behalf of the cores and/or matrix operations circuitry.

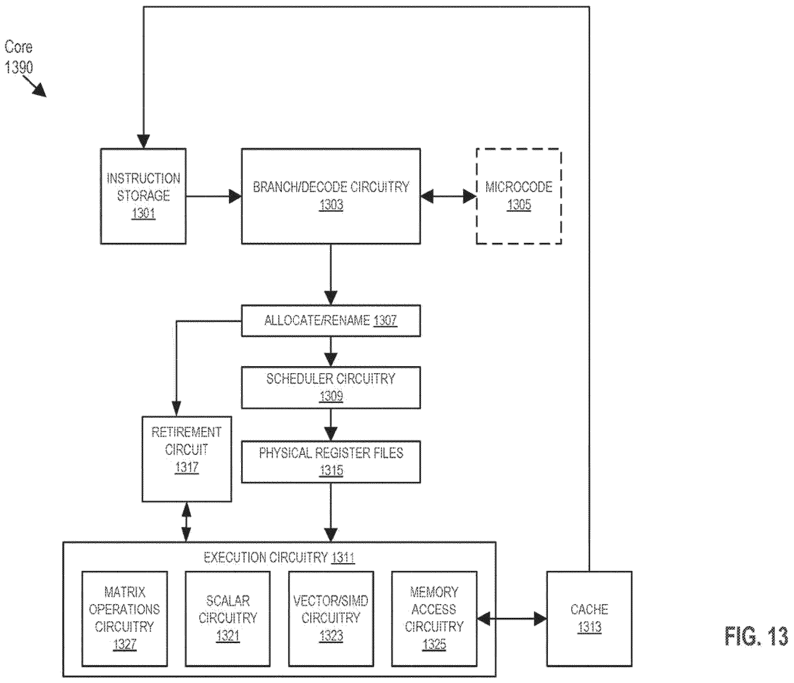

**FIG. 13** illustrates an embodiment of a processor core pipeline supporting matrix operations using tiles. Branch prediction and decode circuitry 1303 performs branch predicting of instructions, decoding of instructions, and/or both from instructions stored in instruction storage 1301. For example, instructions detailed herein may be stored in instruction storage. In some implementations, separate circuitry is used for branch prediction and in some embodiments, at least some instructions are decoded into one or more micro-operations, micro-code entry points, microinstructions, other instructions, or other control signals using microcode 1305. The branch prediction and decode circuitry 1303 may be implemented using various different mechanisms. Examples of suitable mechanisms include, but are not limited to, look-up tables, hardware implementations, programmable logic arrays (PLAs), microcode read only memories (ROMs), etc.

The branch prediction and decode circuitry 1303 is coupled to allocate/rename 1307 circuitry which is coupled, in some embodiments, to scheduler circuitry 1309. In some embodiments, these circuits provide register renaming, register allocation, and/or scheduling functionality by performing one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

The scheduler circuitry 1309 represents any number of different schedulers, including reservations stations, central instruction window, etc. The scheduler circuitry 1309 is coupled to, or includes, physical register file(s) 1315. Each of the physical register file(s) 1315 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), tiles, etc. In one embodiment, the physical register file(s) 1315 comprises vector registers circuitry, write mask registers circuitry, and scalar registers circuitry. These register circuits may provide architectural vector registers, vector mask registers, and general-purpose registers. The physical register file(s) 1315 is overlapped by a retirement circuit 1317 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement circuit 1317 and the physical register file(s) 1315 are coupled to the execution circuitry 1311.

While register renaming is described in the context of out-of-order execution, it should be understood that register renaming may be used in an in-order architecture. While the illustrated embodiment of the processor may also include separate instruction and data cache units and a shared L2 cache unit, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

The execution circuitry 1311 is a set of one or more execution circuits, including scalar circuitry 1321, vector/SIMD circuitry 1323, and matrix operations circuitry 1327, as well as memory access circuitry 1325 to access cache 1313. The execution circuits perform various operations (e.g., shifts, addition, subtraction, multiplication) and on various types of data (e.g., scalar floating-point, packed integer, packed floating-point, vector integer, vector floating-point). While some embodiments may include a number of execution units dedicated to specific functions or sets of functions, other embodiments may include only one execution unit or multiple execution units that all perform all functions. The scalar circuitry 1321 performs scalar operations, the vector/SIMD circuitry 1323 performs vector/SIMD operations, and matrix operations circuitry 1327 performs matrix (tile) operations detailed herein.

By way of example, the exemplary register renaming, out-of-order issue/execution core architecture may implement a pipeline as follows: 1) an instruction fetch circuit performs fetch and length decoding stages; 2) the branch and decode circuitry 1303 performs a decode stage; 3) the allocate/rename 1307 circuitry performs an allocation stage and renaming stage; 4) the scheduler circuitry 1309 performs a schedule stage; 5) physical register file(s) (coupled to, or included in, the scheduler circuitry 1309 and allocate/rename 1307 circuitry and a memory unit perform a register read/memory read stage; the execution circuitry 1311 performs an execute stage; 6) a memory unit and the physical register file(s) unit(s) perform a write back/memory write stage; 7) various units may be involved in the exception handling stage; and 8) a retirement unit and the physical register file(s) unit(s) perform a commit stage.

The core may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1390 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

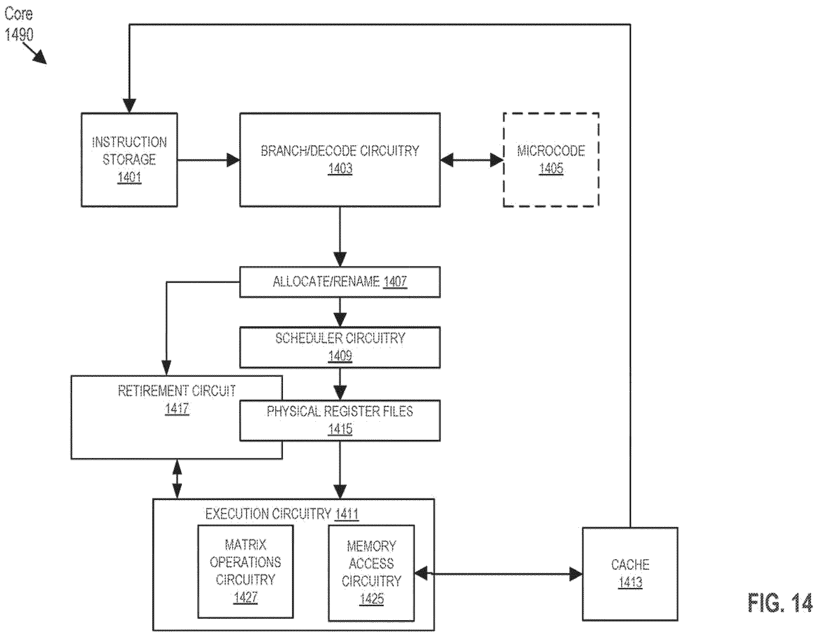

**FIG. 14** illustrates an embodiment of a processor core pipeline supporting matrix operations using tiles. Branch prediction and decode circuitry 1403 performs branch predicting of instructions, decoding of instructions, and/or both from instructions stored in instruction storage 1401. For example, instructions detailed herein may be stored in instruction storage. In some implementations, separate circuitry is used for branch prediction and in some embodiments, at least some instructions are decoded into one or more micro-operations, micro-code entry points, microinstructions, other instructions, or other control signals using microcode 1405. The branch prediction and decode circuitry 1403 may be implemented using various different mechanisms. Examples of suitable mechanisms include, but are not limited to, look-up tables, hardware implementations, programmable logic arrays (PLAs), microcode read only memories (ROMs), etc.

The branch prediction and decode circuitry 1403 is coupled to allocate/rename 1407 circuitry which is coupled, in some embodiments, to scheduler circuitry 1409. In some embodiments, these circuits provide register renaming, register allocation, and/or scheduling functionality by performing one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

The scheduler circuitry 1409 represents any number of different schedulers, including reservations stations, central instruction window, etc. The scheduler unit(s) scheduler circuitry 1409 is coupled to, or includes, physical register file(s) 1415. Each of the physical register file(s) 1415 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), tiles, etc. In one embodiment, the physical register file(s) 1415 comprises vector registers circuitry, write mask registers circuitry, and scalar registers circuitry. These register circuits may provide architectural vector registers, vector mask registers, and general-purpose registers. The physical register file(s) 1415 is overlapped by a retirement circuit 1417 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement circuit 1417 and the physical register file(s) 1415 are coupled to the execution circuitry 1411.

While register renaming is described in the context of out-of-order execution, it should be understood that register renaming may be used in an in-order architecture. While the illustrated embodiment of the processor may also include separate instruction and data cache units and a shared L2 cache unit, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

The execution circuitry 1411 a set of one or more execution circuits 1427 and a set of one or more memory access circuits 1425 to access cache 1413. The execution circuits 1427 perform matrix (tile) operations detailed herein.

By way of example, the exemplary register renaming, out-of-order issue/execution core architecture may implement a pipeline as follows: 1) an instruction fetch circuit performs fetch and length decoding stages; 2) the branch and decode circuitry 1403 performs a decode stage; 3) the allocate/rename 1407 circuitry performs an allocation stage and renaming stage; 4) the scheduler circuitry 1409 performs a schedule stage; 5) physical register file(s) (coupled to, or included in, the scheduler circuitry 1409 and allocate/rename 1407 circuitry and a memory unit perform a register read/memory read stage; the execution circuitry 1411 performs an execute stage; 6) a memory unit and the physical register file(s) unit(s) perform a write back/memory write stage; 7) various units may be involved in the exception handling stage; and 8) a retirement unit and the physical register file(s) unit(s) perform a commit stage.

The core may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1490 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

### LAYOUT

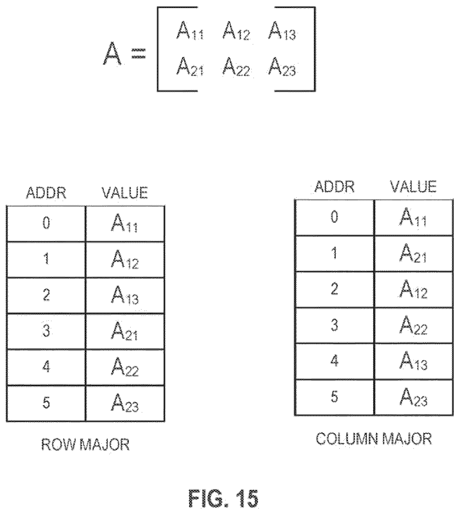

Throughout this description, data is expressed using row major data layout. Column major users should translate the terms according to their orientation. **FIG. 15** illustrates an example of a matrix expressed in row major format and column major format. As shown, matrix A is a 2x3 matrix. When this matrix is stored in row major format, the data elements of a row are consecutive. When this matrix is stored in column major format, the data elements of a column are consecutive. It is a well-known property of matrices that *A^{T}* * *B^{T}* = (*BA*)*^{T}*, where superscript T means transform. Reading column major data as row major data results in the matrix looking like the transform matrix.

In some embodiments, row-major semantics are utilized in hardware, and column major data is to swap the operand order with the result being transforms of matrix, but for subsequent column-major reads from memory it is the correct, non-transformed matrix.

For example, if there are two column-major matrices to multiply:

| | | |
|---|---|---|
| a b | g i k | ag+bh ai+bj ak+bl |
| c d * | h j l = | cg+dh ci+dj ck+dl |
| e f | | eg+fh ei+fj ek+fl |
| (3x2) | (2x3) | (3x3) |

The input matrices would be stored in linear memory (column-major) as:
a c e b d f
   and
g h i j k l.

Reading those matrices as row-major with dimensions 2x3 and 3x2, they would appear as:

| | | |
|---|---|---|
| a c e | and | g h |
| b d f | | i j |
| k l | | |

Swapping the order and matrix multiplying:

| | | | |
|---|---|---|---|
| g h | | a c e | ag+bh cg+dh eg+fh |
| i j | * | b d f = | ai+bj ci+dj ei+fj |
| k l | | | ak+bl ck+dl ek+fl |

The transform matrix is out and can then be stored in in row-major order:
ag+bh cg+dh eg+fh ai+bj ci+dj ei+fj ak+bl ck+dl ek+fl
and used in subsequent column major computations, it is the correct un-transformed matrix:

| | | |
|---|---|---|
| ag+bh | ai+bj | ak+bl |
| cg+dh | ci+dj | ck+dl |
| eg+fh | ei+fj | ek+fl |

### EXEMPLARY USAGE

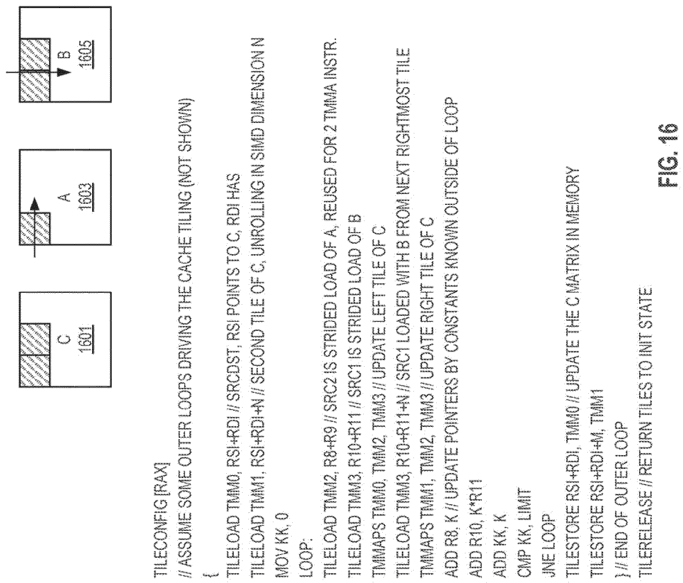

**FIG. 16** illustrates an example of usage of matrices (e.g., tiles). In this example, matrix C 1601 includes two tiles, matrix A 1603 includes one tile, and matrix B 1605 includes two tiles. This figure shows an example of the inner loop of an algorithm to compute a matrix multiplication. In this example, two result tiles, tmm0 and tmm1, from matrix C 1601 are used to accumulate the intermediate results. One tile from the matrix A 1603 (tmm2) is re-used twice as it multiplied by two tiles from matrix B 1605. Pointers to load a new A matrix (tile) and two new B matrices (e.g., tiles) from the directions indicated by the arrows. An outer loop, not shown, adjusts the pointers for the C tiles.

The exemplary code as shown includes the usage of a tile configuration instruction and is executed to configure tile usage, load tiles, a loop to process the tiles, store tiles to memory, and release tile usage.

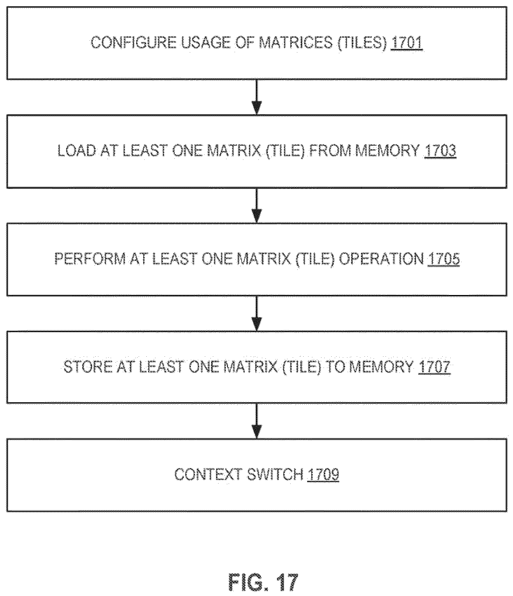

**FIG. 17** illustrates an embodiment of usage of matrices (e.g., tiles). At 1701, tile usage is configured. For example, a TILECONFIG instruction is executed to configure tile usage including setting a number of rows and columns per tile. Typically, at least one matrix (tile) is loaded from memory at 1703. At least one matrix (tile) operation is performed at 1705 using the matrices (e.g., tiles). At 1707, at least one matrix (tile) is stored out to memory and a context switch can occur at 1709.

### EXEMPLARY CONFIGURATION

### TILE CONFIGURATION HARDWARE SUPPORT

As discussed above, tile usage typically needs to be configured prior to use. For example, full usage of all rows and columns may not be needed. Not only does not configuring these rows and columns save power in some embodiments, but the configuration may be used to determine if an operation will generate an error. For example, a matrix multiplication of the form (N x M) * (L x N) will typically not work if M and L are not the same.

Prior to using matrices using tiles, in some embodiments, tile support is to be configured. For example, how many rows and columns per tile, tiles that are to be used, etc. are configured. A TILECONFIG instruction is an improvement to a computer itself as it provides for support to configure the computer to use a matrix accelerator (either as a part of a processor core, or as an external device). In particular, an execution of the TILECONFIG instruction causes a configuration to be retrieved from memory and applied to matrix (tile) settings within a matrix accelerator.

### TILE USAGE CONFIGURATION

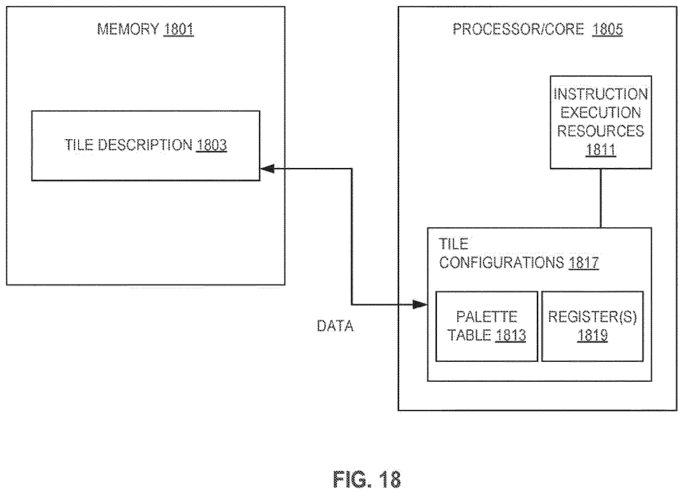

**FIG. 18** illustrates support for configuration of the usage of tiles according to an embodiment. A memory 1801 contains the tile description 1803 of the matrices (e.g., tiles) to be supported.

Instruction execution resources 1811 of a processor/core 1805 stores aspects of a tile description 1803 into tile configurations 1817. The tile configurations 1817 include palette table 1813 to detail what tiles for a palette are configured (the number of rows and columns in each tile) and a marking that matrix support is in use. In particular, instruction execution resources 1811 are configured to use tiles as specified by the tile configurations 1817. The instruction execution resources 1811 may also include a machine specific register or configuration register to indicate tile usage. Additional values such as in-use and start values are also set. The tile configurations 1817 utilize register(s) 1819 to store tile usage and configuration information.

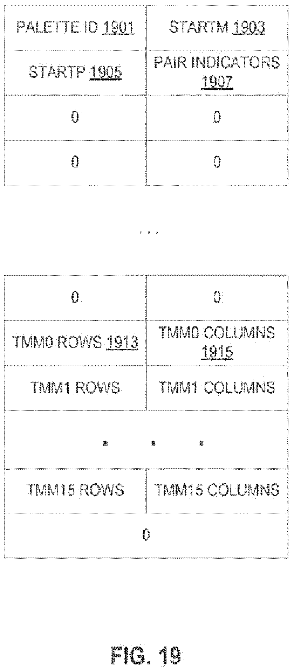

**FIG. 19** illustrates an embodiment of a description of the matrices (e.g., tiles) to be supported. This is the description that is to be stored upon an execution of a STTILECFG instruction. In this example, each field is a byte. In byte [0], a palette ID 1901 is stored. The palette ID is used to index a palette table 1813 which stores, per palette ID, a number of bytes in a tile, and bytes per row of the tiles that are associated with this ID as defined by the configuration.

Byte 1 stores a value to be stored in a "startRow" register 1903 and byte 2 stores a value to be stored in a register, startP 1905. To support restarting instructions after these events, the instructions store information these registers. To support restarting instructions after break events such as those detailed above, the instructions store information in these registers. The startRow value indicates the row that should be used for restart. The startP value indicates the position within the row for store operations when pairs are used and, in some embodiments, indicates the lower half of the row (in the lower tile of a pair) or higher half of the row (in the higher tile of a pair). Generally, the position in the row (the column) is not needed.

With the exception of TILECONFIG and STTILECFG, successfully executing matrix (tile) instructions will set both startRow and startP to zero.

Any time an interrupted matrix (tile) instruction is not restarted, it is the responsibility of software to zero the startRow and startP values. For example, unmasked floating-point exception handlers might decide to finish the operation in software and change the program counter value to another instruction, usually the next instruction. In this case the software exception handler must zero the startRow and startP values in the exception presented to it by the operating system before resuming the program. The operating system will subsequently reload those values using a restore instruction.

Byte 3 stores an indication of pairs (1b per tile) of tiles 1907.

Bytes 16-17 store the number of rows 1913 and columns 1915 for tile 0, bytes 18-19 store the number of rows and columns for tile 1, etc. In other words, each 2-byte group specifies a number of rows and columns for a tile. If a group of 2 bytes is not used to specify tile parameters, they should have the value zero. Specifying tile parameters for more tiles than the implementation limit or the palette limit results in a fault. Unconfigured tiles are set to an initial state with 0 rows, 0 columns.

Finally, the configuration in memory typically ends with an ending delineation such as all zeros for several consecutive bytes.

### EXEMPLARY TILE AND TILE CONFIGURATION STORAGE

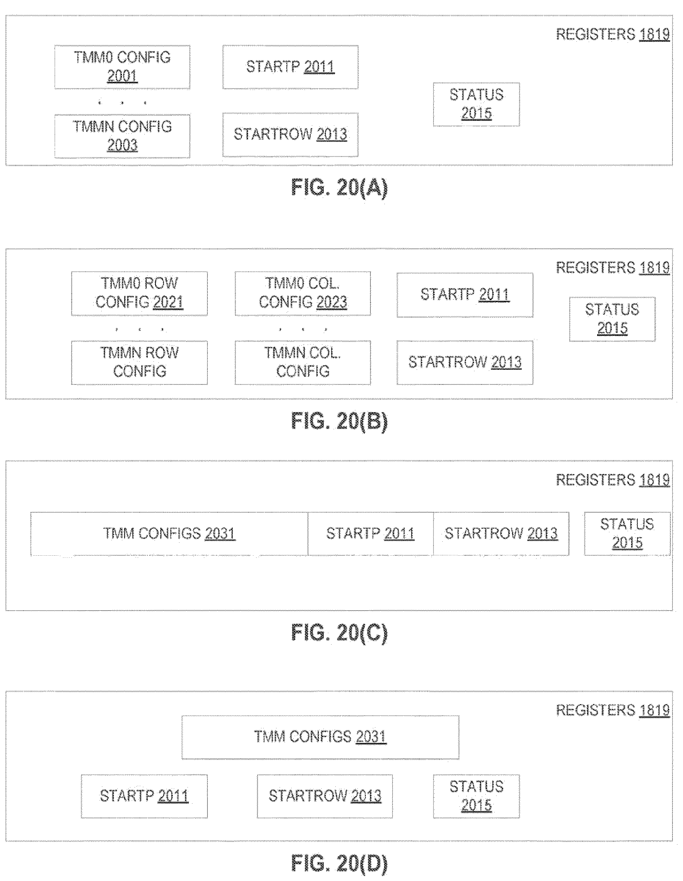

**FIG.s 20(A)****-(D)** illustrate examples of register(s) 1819. **FIG. 20(A)** illustrates a plurality of registers 1819. As shown each tile (TMM0 2001 ... TMMN 2003) has a separate register with each register storing a row and column size for that particular tile. StartP 2011 and StartRow 2013 are stored in separate registers. One or more status registers 2015 are set (e.g., TILES_CONFIGURED = 1) to indicate tiles are configured for use.

**FIG. 20(B)** illustrates a plurality of registers 1819. As shown each tile has separate registers for its rows and columns. For example, TMM0 rows configuration 2021, TMM0 columns configuration 2023, StartP 2011 and StartRow 2013 are stored in separate registers. One or more status registers 2015 are set (e.g., TILES_CONFIGURED = 1) to indicate tiles are configured for use.

**FIG. 20(C)** illustrates a single register 1819. As shown, this register stores tile configurations (rows and columns per tile) 2031, StartP 2011, and StartRow 2013 are stored in single register as packed data registers. One or more status registers 2015 are set (e.g., TILES_CONFIGURED = 1) to indicate tiles are configured for use.

**FIG. 20(D)** illustrates a plurality of registers 1819. As shown, a single register stores tile configuration (rows and columns per tile) 2031. StartP and StartRow are stored in separate registers 2011 and 2013. One or more status registers 2015 are set (e.g., TILES_CONFIGURED = 1) to indicate tiles are configured for use.

Other combinations are contemplated such as combining the start registers into a single register where they are shown separately, etc.

Detailed herein are instructions to accelerate matrix multiplication with "*n*:*m* structured sparsity" - a sparsity pattern with the property that there are at most n non-zeros out of each consecutive m elements. These instructions are herein called "sparsity FMA" instructions. These instructions operate on different data type formats. In certain embodiments, one 16-bit floating point format is a sixteen bit wide Institute of Electrical and Electronics Engineers (IEEE) (e.g., IEEE 754 standard) half-precision binary floating-point format (IEEE float16) having a sign field (one bit wide), an exponent field (five bits wide), and a mantissa (significand precision) field (eleven bits implicitly stored, i.e., ten bits wide explicitly stored). In certain embodiments, another 16-bit floating point format is a sixteen bits wide, brain floating point format (bfloat16 of bf16) having a sign field (one bit wide), an exponent field (eight bits wide), and a mantissa (significand precision) field (eight bits implicitly stored, i.e., seven bits wide explicitly stored). In certain embodiments, a mantissa (significand precision) field is presumed to have an implicit leading bit with value of one, unless the exponent field is stored with all zeros. Further, a 32-bit floating-point format may include binary32 (according to an IEEE standard), which is sometimes referred to herein as "single-precision" or "fp32", e.g., having a sign field (one bit wide), an exponent field (eight bits wide), and a mantissa (significand precision) field (twenty four bits implicitly stored, i.e., twenty three bits wide explicitly stored).

Specifically, in some embodiments, a 2:4 structured sparsity is used for 16-bit datatypes (e.g., fp16, bf16) and 4:8 structured sparsity for 8-bit datatypes (e.g., 8-bit integer or int8).

The instructions operate on two "A" tiles with dense data (one for "odd" elements and one for "even" elements), a first "B" tile which represents two 2:4/4:8 structured-sparse tiles compressed into one tile and a second "B" tile with sparsity controls (bit per B element in the non-compressed representation) and a "C" source/destination tile. Every individual dot product involves 64 bits from "A" and 32 bits from "B." In the INT8 case, 4 8-bit elements are selected out of the eight from both "A" tiles are dot-product multiplied with 4 first "B" tile elements from a corresponding 32-bit chunk. In the 16-bit case (FP16 or BF16), 2 16-bit elements will be selected out of the four from the "A" are dot-product multiplied with the 2 first "B" tile elements from a corresponding 32-bit chunk. Note that the results of the dot products multiplications are added and then accumulated into a corresponding row and column of "C."

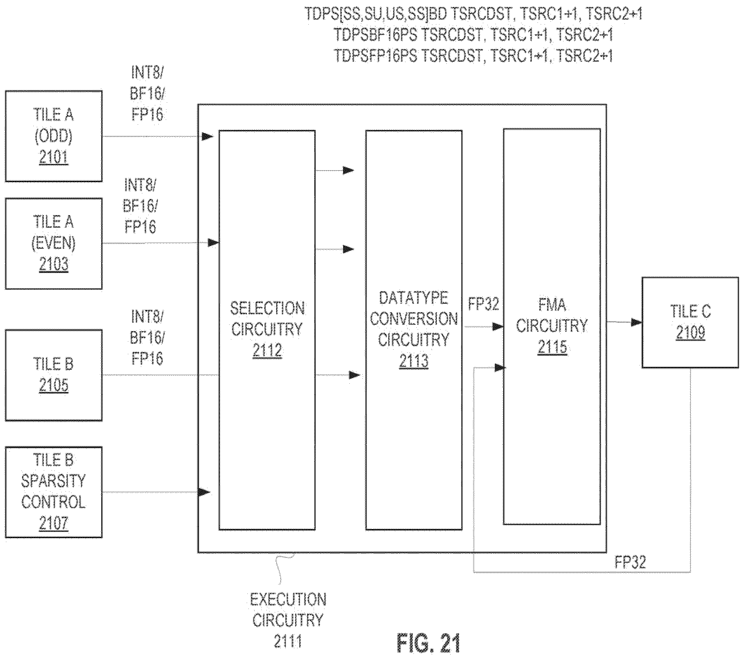

FIG. 21 illustrates examples of hardware support for executing sparsity FMA instructions. In particular, this illustrates support for one or more sparsity FMA instructions to perform a dot product and accumulation. Note that tile "A" refers to TSRC1+1 (two source tiles with only one needing to be explicitly indicated - the second source tile is usually either logically one higher (e.g., TSRC1 = 5, TSRC1+1 = 6), or logically one lower), tile "B" refers to TSRC2+1 (similarly only indicates a single tile), and tile "C" refers to a source/destination tile.

An embodiment of a format for first sparsity FMA instruction is TDPS[SS, SU,US,SS]BD TSRCDST, TSRC1+1, TSRC2+1. In some embodiments, TDPS[SS, SU,US,SS]BD is the opcode mnemonic of the instruction and indicates an FMA using INT8 data elements from TSRC1+1. Each letter in the two-letter pattern SU, US, SS, UU indicates the signed/unsigned nature of the values in TSRC1+1 and TSRC2+1, respectively. TSRCDST is indicated by one or more fields for a tile operand. TSRC1+1 and TSRC2+1 are indicated by one or more fields for the tile sources. In some embodiments, TSRCDST is encoded using ModRM:reg 3744, TSRC1 is encoded using ModRM:r/m 3746, and TSRC2 is encoded using VVVV of 4005 or 4017.

An embodiment of a format for first sparsity FMA instruction is TDPSBF16PS TSRCDST, TSRC1+1, TSRC2+1. In some embodiments, TDPSBF16PS is the opcode mnemonic of the instruction and indicates an FMA using BF16 data elements from TSRC1+1. TSRCDST is indicated by one or more fields for a tile operand. TSRC1+1 and TSRC2+1 are indicated by one or more fields for the tile sources. In some embodiments, TSRCDST is encoded using ModRM:reg 3744, TSRC1 is encoded using ModRM:r/m 3746, and TSRC2 is encoded using VVVV of 4005 or 4017.

An embodiment of a format for first sparsity FMA instruction is TDPSFP16PS TSRCDST, TSRC1+1, TSRC2+1. In some embodiments, TDPSFP16PS is the opcode mnemonic of the instruction and indicates an FMA using FP16 data elements from TSRC1+1. TSRCDST is indicated by one or more fields for a tile operand. TSRC1+1 and TSRC2+1 are indicated by one or more fields for the tile sources. In some embodiments, TSRCDST is encoded using ModRM:reg 3744, TSRC1 is encoded using ModRM:r/m 3746, and TSRC2 is encoded using VVVV of 4005 or 4017.

The two "A" tiles 2101 and 2103, "B" tile 2105, and "C" tile 2109 are fed, as sources, into execution 2111 to perform a FMA using these sources. Sparsity control values from tile "B" sparsity control 2107 are used to select which data elements from the two "A" tiles 2101 and 2103 are to be used in the FMA using selection circuitry 2112. The selected data elements from the two "A" tiles 2101 and 2103 undergo a datatype conversion (e.g., from INT8 to FP32, BF16 to FP32, or FP16 to FP32) using datatype conversion circuitry 2113. In some embodiments, BF16 to FP32 comprises placing the BF16 value in the upper half of a FP32 double word value (e.g., bits 31:16 are BF16, and the remaining bits are 0). Note the order of selection and conversion may be flipped.

The FMA circuitry 2115 takes the selected and converted data elements from "A" and performs dot-product multiplications with the "B" tile elements from a corresponding 32-bit chunk. The results of the dot products multiplications are added and then accumulated into a corresponding row and column of "C" 2109.

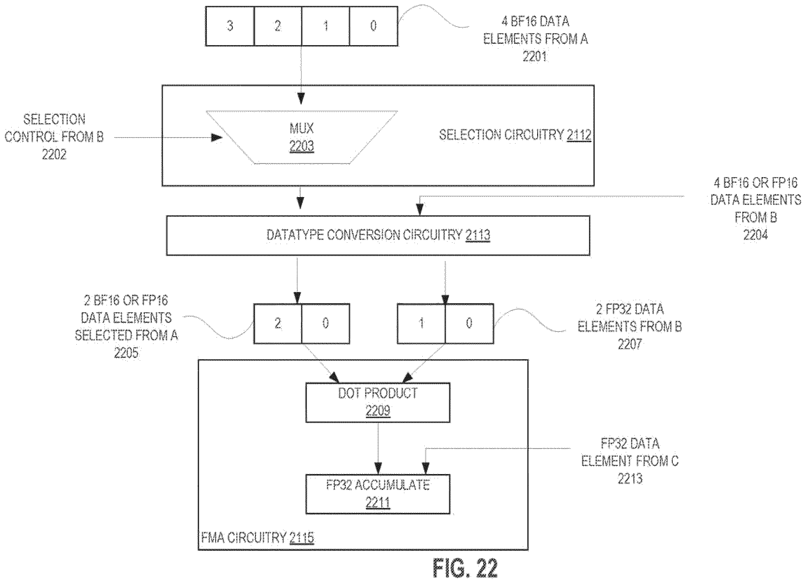

FIG. 22 illustrates examples of an FMA using BF16 or FP data elements. This FMA may be performed using execution circuitry 2111. In this example, 4 BF16 or FP data elements from an "A" tile 2201. Selection control information from a "B" tile (e.g., tile "B" sparsity control 2107) is used by a multiplexer 2203 to select a proper subset of the 4 BF16 or FP data elements.

Datatype conversion circuitry 2113 converts the selected proper subset of 2 BF16 or FP data elements from "A" and 2 BF16 or FP data elements from "B" 2204. The converted data elements 2205 and 2207 are then fed to FMA circuitry 2115 such as to a dot product circuit 2209 and the result of the dot product multiplication and addition is fed accumulated in an FP32 accumulator 2211 with a FP32 data element from "C" 2213.

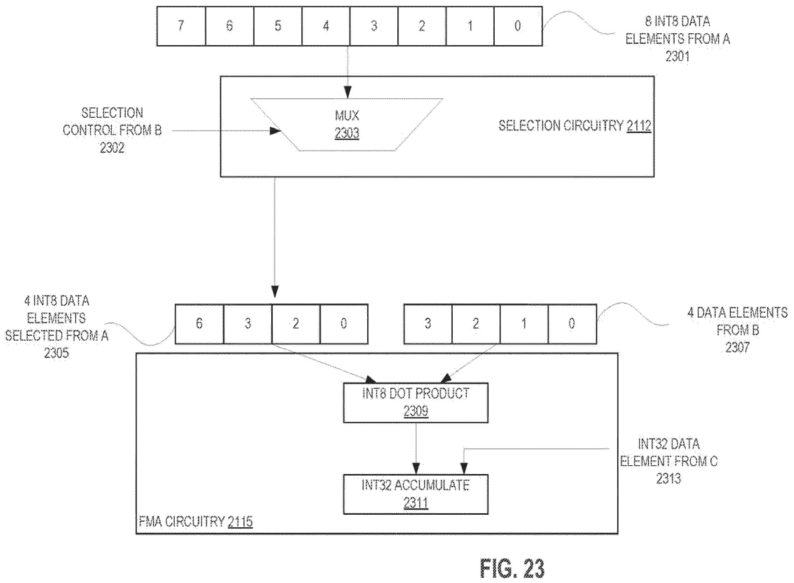

FIG. 23 illustrates examples of an FMA using INT8 data elements. This FMA may be performed using execution circuitry 2111. In this example, 8 INT8 data elements from an "A" tile 2301. Selection control information 2302 from a "B" tile (e.g., tile "B" sparsity control 2107) is used by a multiplexer 2303 to select a proper subset of the 8 INT8 data elements.

The selected proper subset of 4 INT8 data elements from "A" and 4 INT8 data elements from "B" 2307 are fed to FMA circuitry 2115 such as to an INT8 dot product circuit 2309 and the result of the dot product multiplication and addition is fed accumulated in an INT8 accumulator 2311 with a FP32 data element from C 2313.

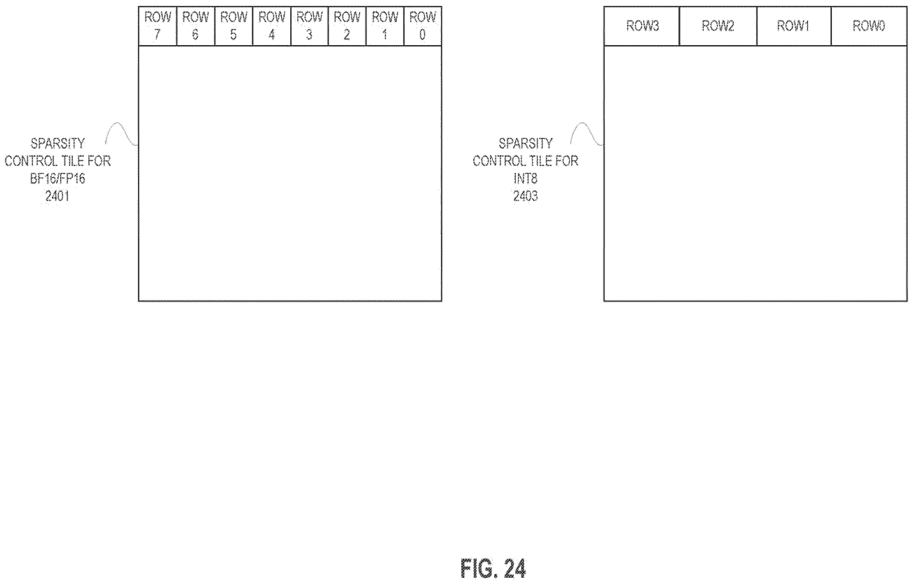

FIG. 24 illustrates examples of sparsity control tiles. As noted, sparsity controls, are used to select the elements from "A" are in one of the two "B" tiles. For the 16-bit case (BF16 or FP16), every row in the sparsity controls tile will hold controls for 8 B rows as shown in sparsity control tile for BF16/FP16 2401. For the INT8 case, every row in the sparsity controls tile will hold controls for 4 B rows as shown in sparsity control tile for INT8 2403. In some embodiments, the split is according to a maximum bytes per row (colsb) value found in the palette.

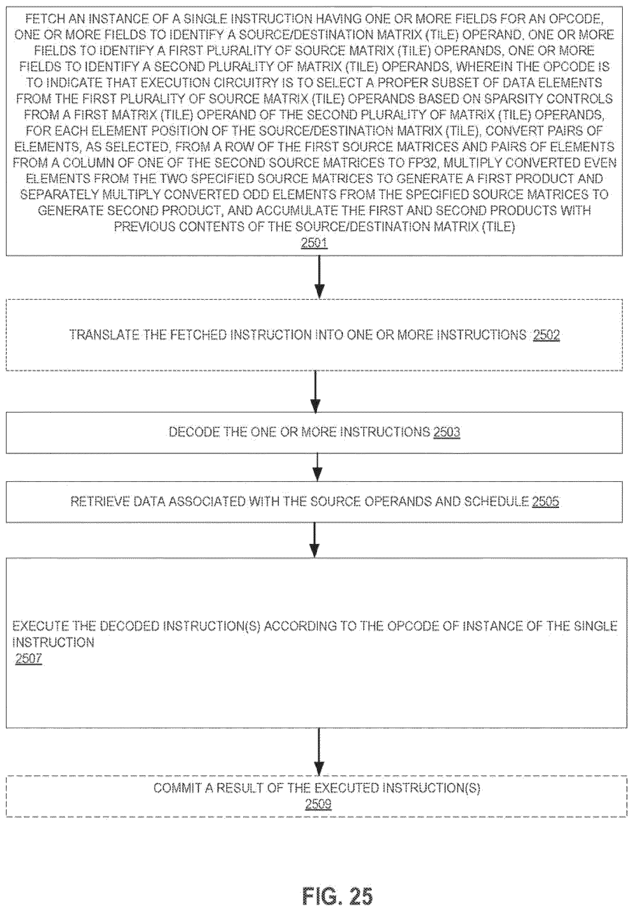

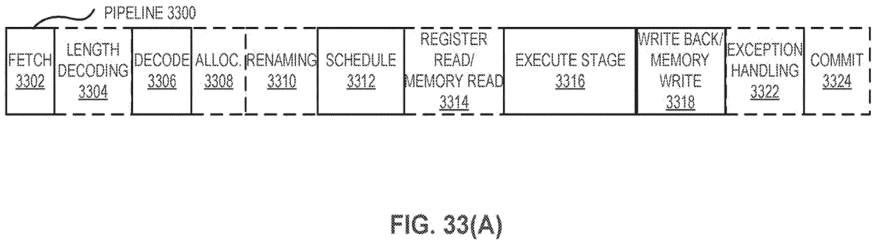

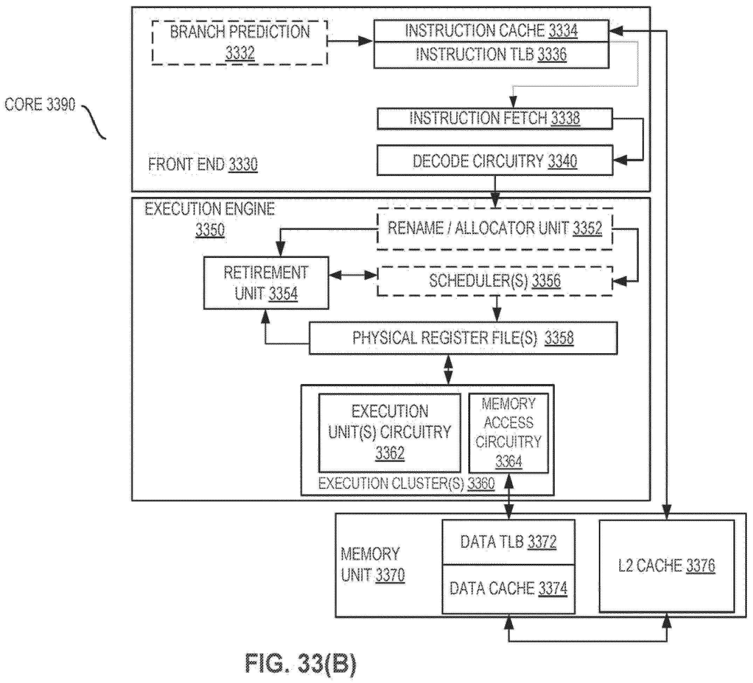

**FIG. 25** illustrates examples of a method performed by a processor to process a sparsity FMA instruction. For example, a processor core as shown in FIG. 33(B), a pipeline as detailed below, etc. performs this method.

At 2501, an instance of a single instruction having one or more fields for an opcode, one or more fields to identify a source/destination matrix (tile) operand, one or more fields to identify a first plurality of source matrix (tile) operands, one or more fields to identify a second plurality of matrix (tile) operands, wherein the opcode is to indicate that execution circuitry is to select a proper subset of data elements from the first plurality of source matrix (tile) operands based on sparsity controls from a first matrix (tile) operand of the second plurality of matrix (tile) operands, for each element position of the source/destination matrix (tile), convert pairs of elements, as selected, from a row of the first source matrices and pairs of elements from a column of one of the second source matrices to fp32, multiply converted even elements from the two specified source matrices to generate a first product and separately multiply converted odd elements from the specified source matrices to generate second product, and accumulate the first and second products with previous contents of the source/destination matrix (tile). In some embodiments, unused rows of the source/destination matrix (tile) operand are zeroed.

In some embodiments, the fetched instruction of the first instruction set is translated into one or more instructions of a second, different instruction set at 2502. This translation may be done in hardware, software, or a combination thereof.

The instance of the single instruction, or the one or more translated instructions of the second, different instruction set, is/are decoded at 2503. In some embodiments, the translation and decoding are merged.

Data values associated with the source operands of the decoded instruction are retrieved and the instruction is scheduled at 2505. For example, when one or more of the source operands are memory operands, the data from the indicated memory location is retrieved. Note that in some embodiments, the scheduling includes sending a command to an accelerator to perform the operation(s) according to the opcode of the instance of the single instruction.

At 2507, the decoded instruction(s) is/are executed by execution circuitry (hardware) such as that detailed herein. The execution circuitry may be in a processor core or in an accelerator external to a processor core. In some embodiments, the execution circuitry is configured such one or more conditions of: denormals are treated as zero (DAZ), flush to zero (FTZ) is used (denormal results are set to zero), round to nearest even (RNE) rounding is used, and/or all exceptions are suppressed (SAE).

In some embodiments, the instruction is committed or retired at 2509.

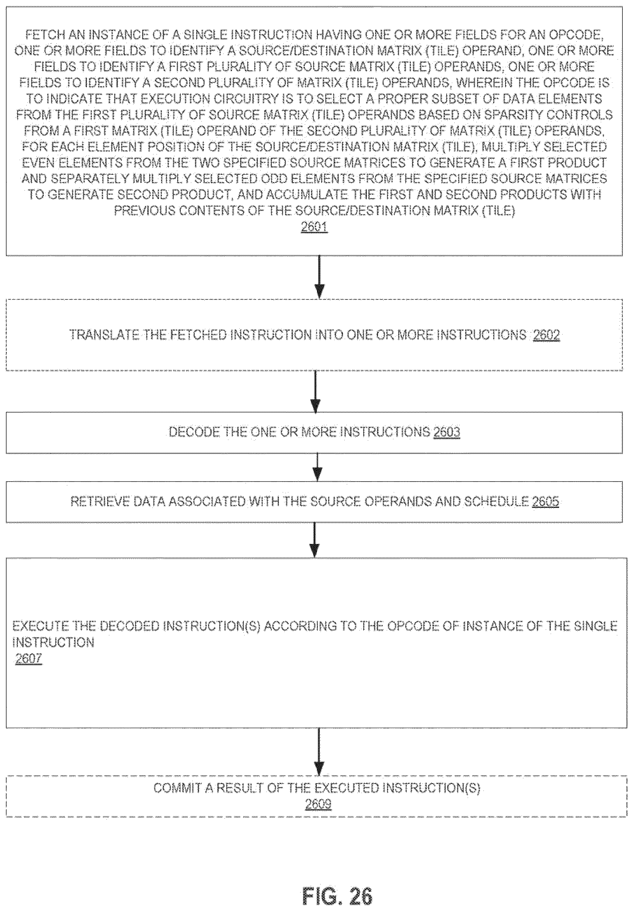

**FIG. 26** illustrates examples of a method performed by a processor to process a sparsity FMA instruction. For example, a processor core as shown in FIG. 33(B), a pipeline as detailed below, etc. performs this method.

At 2601, an instance of a single instruction having one or more fields for an opcode, one or more fields to identify a source/destination matrix (tile) operand, one or more fields to identify a first plurality of source matrix (tile) operands, one or more fields to identify a second plurality of matrix (tile) operands, wherein the opcode is to indicate that execution circuitry is to select a proper subset of data elements from the first plurality of source matrix (tile) operands based on sparsity controls from a first matrix (tile) operand of the second plurality of matrix (tile) operands, for each element position of the source/destination matrix (tile), multiply selected even elements from the two specified source matrices to generate a first product and separately multiply selected odd elements from the specified source matrices to generate second product, and accumulate the first and second products with previous contents of the source/destination matrix (tile). In some embodiments, unused rows of the source/destination matrix (tile) operand are zeroed.

In some embodiments, the fetched instruction of the first instruction set is translated into one or more instructions of a second, different instruction set at 2602. This translation may be done in hardware, software, or a combination thereof.

The instance of the single instruction, or the one or more translated instructions of the second, different instruction set, is/are decoded at 2603. In some embodiments, the translation and decoding are merged.

Data values associated with the source operands of the decoded instruction are retrieved and the instruction is scheduled at 2605. For example, when one or more of the source operands are memory operands, the data from the indicated memory location is retrieved. Note that in some embodiments, the scheduling includes sending a command to an accelerator to perform the operation(s) according to the opcode of the instance of the single instruction.

At 2607, the decoded instruction(s) is/are executed by execution circuitry (hardware) such as that detailed herein. The execution circuitry may be in a processor core or in an accelerator external to a processor core. In some embodiments, the execution circuitry is configured such one or more conditions of: denormals are treated as zero (DAZ), flush to zero (FTZ) is used (denormal results are set to zero), round to nearest even (RNE) rounding is used, and/or all exceptions are suppressed (SAE).

In some embodiments, the instruction is committed or retired at 2609.

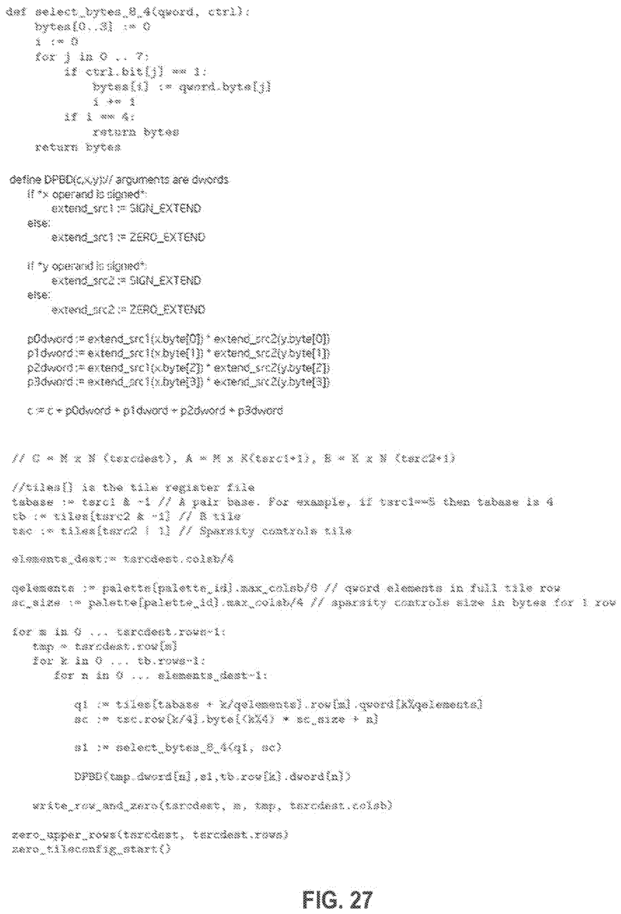

FIG. 27 illustrates exemplary pseudocode for a TDPS[SS, SU,US,SS]BD instruction. Note that while the code indicates a serial approach, in some embodiments, this is merely a logical construct and at least a proper subset of data elements of tiles are operated on in parallel. Additionally, note that the code uses Java operators such as % for a remainder operation.

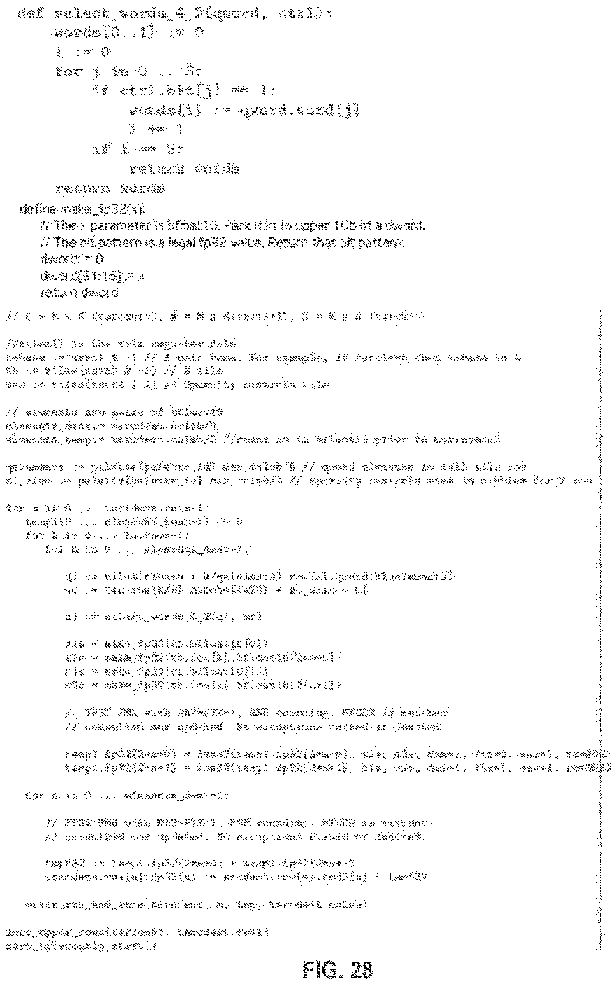

FIG. 28 illustrates exemplary pseudocode for a TDPSBF16PS instruction. Note that while the code indicates a serial approach, in some embodiments, this is merely a logical construct and at least a proper subset of data elements of tiles are operated on in parallel. Additionally, note that the code uses Java operators such as % for a remainder operation.

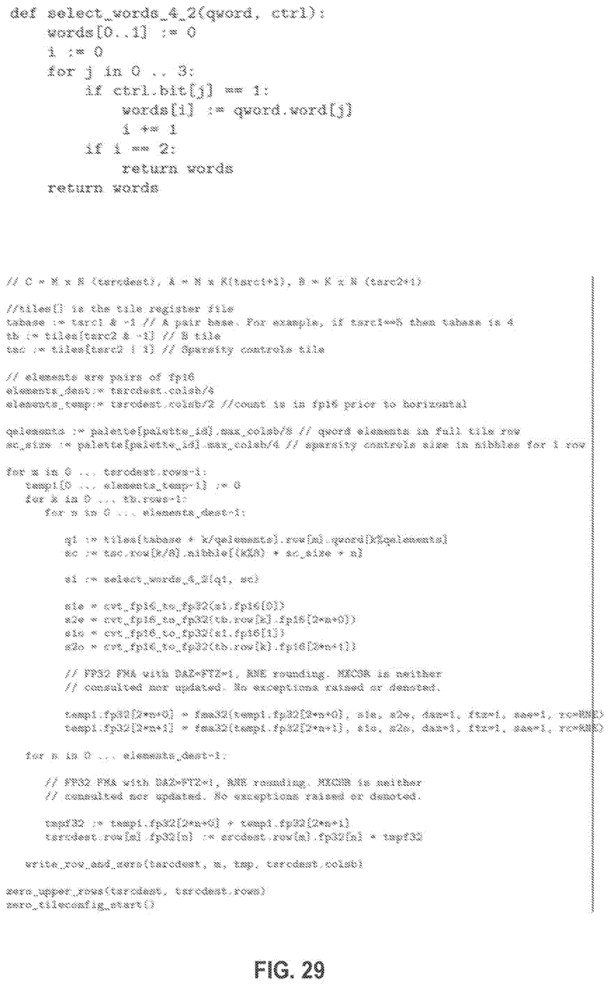

FIG. 29 illustrates exemplary pseudocode for a TDPSFP16PS instruction. Note that while the code indicates a serial approach, in some embodiments, this is merely a logical construct and at least a proper subset of data elements of tiles are operated on in parallel. Additionally, note that the code uses Java operators such as % for a remainder operation.

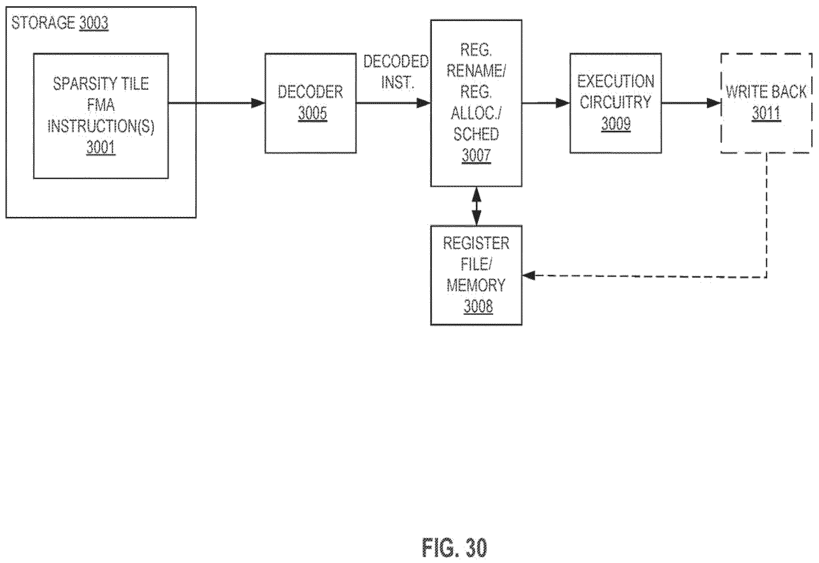

**FIG. 30** illustrates examples of hardware to process an instance of a single instruction such as one of the sparsity FMA instructions. As illustrated, storage 3003 stores at least one of the sparsity FMA instructions 3001 to be executed.

The instruction 3001 is received by decode circuitry 3005. For example, the decode circuitry 3005 receives this instruction from fetch logic/circuitry. The instruction includes fields for an opcode, explicit first and second tile sources, and a source/destination.

More detailed embodiments of at least one instruction format will be detailed later. The decode circuitry 3005 decodes the instruction into one or more operations. In some embodiments, this decoding includes generating a plurality of micro-operations to be performed by execution circuitry (such as execution circuitry 3009). The decode circuitry 3005 also decodes instruction prefixes.

In some embodiments, register renaming, register allocation, and/or scheduling circuitry 3007 provides functionality for one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

Registers (register file) and/or memory 3008 store data as operands of the instruction to be operated on by execution circuitry 3009. Exemplary register types include packed data registers, general purpose registers, tile, and floating-point registers.

Execution circuitry 3009 executes the decoded instruction according to the opcode of the instance of the single instruction. Exemplary detailed execution circuitry is shown in FIGS. 21, 33, etc.

In some embodiments, retirement/write back circuitry 3011 architecturally commits the destination register into the registers or memory 3008 and retires the instruction.

### DETAILED EXEMPLARY SYSTEMS, PROCESSORS, AND EMULATION

Detailed herein are examples of hardware, software, etc. to execute the above described instructions. For example, what is described below details aspects of instruction execution including various pipeline stages such as fetch, decode, schedule, execute, retire, etc.

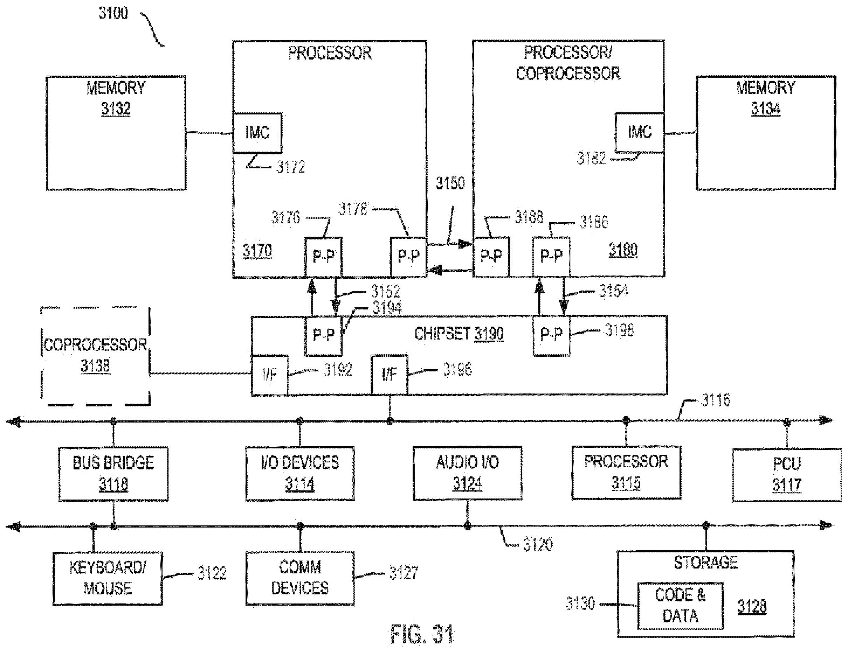

**FIG. 31** illustrates embodiments of an exemplary system. Multiprocessor system 3100 is a point-to-point interconnect system and includes a plurality of processors including a first processor 3170 and a second processor 3180 coupled via a point-to-point interconnect 3150. In some embodiments, the first processor 3170 and the second processor 3180 are homogeneous. In some embodiments, first processor 3170 and the second processor 3180 are heterogenous.

Processors 3170 and 3180 are shown including integrated memory controller (IMC) units circuitry 3172 and 3182, respectively. Processor 3170 also includes as part of its interconnect controller units point-to-point (P-P) interfaces 3176 and 3178; similarly, second processor 3180 includes P-P interfaces 3186 and 3188. Processors 3170, 3180 may exchange information via the point-to-point (P-P) interconnect 3150 using P-P interface circuits 3178, 3188. IMCs 3172 and 3182 couple the processors 3170, 3180 to respective memories, namely a memory 3132 and a memory 3134, which may be portions of main memory locally attached to the respective processors.

Processors 3170, 3180 may each exchange information with a chipset 3190 via individual P-P interconnects 3152, 3154 using point to point interface circuits 3176, 3194, 3186, 3198. Chipset 3190 may optionally exchange information with a coprocessor 3138 via a high-performance interface 3192. In some embodiments, the coprocessor 3138 is a special-purpose processor, such as, for example, a high-throughput MIC processor, a network or communication processor, compression engine, graphics processor, GPGPU, embedded processor, or the like.

A shared cache (not shown) may be included in either processor 3170, 3180 or outside of both processors, yet connected with the processors via P-P interconnect, such that either or both processors' local cache information may be stored in the shared cache if a processor is placed into a low power mode.

Chipset 3190 may be coupled to a first interconnect 3116 via an interface 3196. In some embodiments, first interconnect 3116 may be a Peripheral Component Interconnect (PCI) interconnect, or an interconnect such as a PCI Express interconnect or another I/O interconnect. In some embodiments, one of the interconnects couples to a power control unit (PCU) 3117, which may include circuitry, software, and/or firmware to perform power management operations with regard to the processors 3170, 3180 and/or co-processor 3138. PCU 3117 provides control information to a voltage regulator to cause the voltage regulator to generate the appropriate regulated voltage. PCU 3117 also provides control information to control the operating voltage generated. In various embodiments, PCU 3117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 3117 is illustrated as being present as logic separate from the processor 3170 and/or processor 3180. In other cases, PCU 3117 may execute on a given one or more of cores (not shown) of processor 3170 or 3180. In some cases, PCU 3117 may be implemented as a microcontroller (dedicated or general-purpose) or other control logic configured to execute its own dedicated power management code, sometimes referred to as P-code. In yet other embodiments, power management operations to be performed by PCU 3117 may be implemented externally to a processor, such as by way of a separate power management integrated circuit (PMIC) or another component external to the processor. In yet other embodiments, power management operations to be performed by PCU 3117 may be implemented within BIOS or other system software.

Various I/O devices 3114 may be coupled to first interconnect 3116, along with an interconnect (bus) bridge 3118 which couples first interconnect 3116 to a second interconnect 3120. In some embodiments, one or more additional processor(s) 3115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 3116. In some embodiments, second interconnect 3120 may be a low pin count (LPC) interconnect. Various devices may be coupled to second interconnect 3120 including, for example, a keyboard and/or mouse 3122, communication devices 3127 and a storage unit circuitry 3128. Storage unit circuitry 3128 may be a disk drive or other mass storage device which may include instructions/code and data 3130, in some embodiments. Further, an audio I/O 3124 may be coupled to second interconnect 3120. Note that other architectures than the point-to-point architecture described above are possible. For example, instead of the point-to-point architecture, a system such as multiprocessor system 3100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

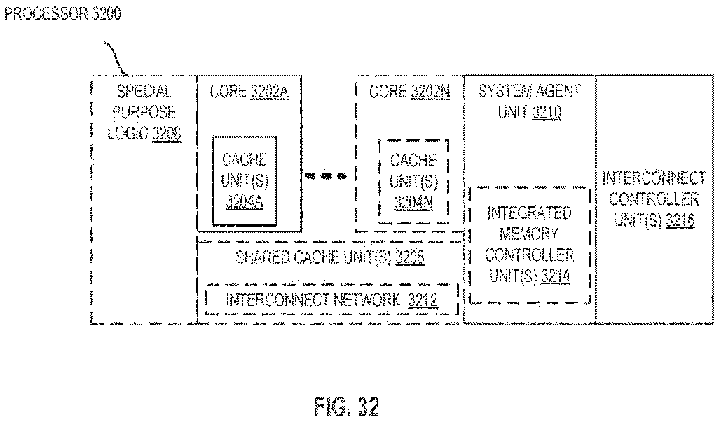

**FIG. 32** illustrates a block diagram of embodiments of a processor 3200 that may have more than one core, may have an integrated memory controller, and may have integrated graphics. The solid lined boxes illustrate a processor 3200 with a single core 3202A, a system agent 3210, a set of one or more interconnect controller units circuitry 3216, while the optional addition of the dashed lined boxes illustrates an alternative processor 3200 with multiple cores 3202(A)-(N), a set of one or more integrated memory controller unit(s) circuitry 3214 in the system agent unit circuitry 3210, and special purpose logic 3208, as well as a set of one or more interconnect controller units circuitry 3216. Note that the processor 3200 may be one of the processors 3170 or 3180, or co-processor 3138 or 3115 of **FIG. 31****.**

Thus, different implementations of the processor 3200 may include: 1) a CPU with the special purpose logic 3208 being integrated graphics and/or scientific (throughput) logic (which may include one or more cores, not shown), and the cores 3202(A)-(N) being one or more general purpose cores (e.g., general purpose in-order cores, general purpose out-of-order cores, or a combination of the two); 2) a coprocessor with the cores 3202(A)-(N) being a large number of special purpose cores intended primarily for graphics and/or scientific (throughput); and 3) a coprocessor with the cores 3202(A)-(N) being a large number of general purpose in-order cores. Thus, the processor 3200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 3200 may be a part of and/or may be implemented on one or more substrates using any of a number of process technologies, such as, for example, BiCMOS, CMOS, or NMOS.

A memory hierarchy includes one or more levels of cache unit(s) circuitry 3204(A)-(N) within the cores 3202(A)-(N), a set of one or more shared cache units circuitry 3206, and external memory (not shown) coupled to the set of integrated memory controller units circuitry 3214. The set of one or more shared cache units circuitry 3206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 3212 interconnects the special purpose logic 3208 (e.g., integrated graphics logic), the set of shared cache units circuitry 3206, and the system agent unit circuitry 3210, alternative embodiments use any number of well-known techniques for interconnecting such units. In some embodiments, coherency is maintained between one or more of the shared cache units circuitry 3206 and cores 3202(A)-(N).

In some embodiments, one or more of the cores 3202(A)-(N) are capable of multithreading. The system agent unit circuitry 3210 includes those components coordinating and operating cores 3202(A)-(N). The system agent unit circuitry 3210 may include, for example, power control unit (PCU) circuitry and/or display unit circuitry (not shown). The PCU may be or may include logic and components needed for regulating the power state of the cores 3202(A)-(N) and/or the special purpose logic 3208 (e.g., integrated graphics logic). The display unit circuitry is for driving one or more externally connected displays.

The cores 3202(A)-(N) may be homogenous or heterogeneous in terms of architecture instruction set; that is, two or more of the cores 3202(A)-(N) may be capable of executing the same instruction set, while other cores may be capable of executing only a subset of that instruction set or a different instruction set.

### Exemplary Core Architectures

### In-order and out-of-order core block diagram

**FIG. 33(A)** is a block diagram illustrating both an exemplary in-order pipeline and an exemplary register renaming, out-of-order issue/execution pipeline according to embodiments of the invention. **FIG. 33(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 33(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 33(A)****,** a processor pipeline 3300 includes a fetch stage 3302, an optional length decode stage 3304, a decode stage 3306, an optional allocation stage 3308, an optional renaming stage 3310, a scheduling (also known as a dispatch or issue) stage 3312, an optional register read/memory read stage 3314, an execute stage 3316, a write back/memory write stage 3318, an optional exception handling stage 3322, and an optional commit stage 3324. One or more operations can be performed in each of these processor pipeline stages. For example, during the fetch stage 3302, one or more instructions are fetched from instruction memory, during the decode stage 3306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 3306 and the register read/memory read stage 3314 may be combined into one pipeline stage. In one embodiment, during the execute stage 3316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 3300 as follows: 1) the instruction fetch 3338 performs the fetch and length decoding stages 3302 and 3304; 2) the decode unit circuitry 3340 performs the decode stage 3306; 3) the rename/allocator unit circuitry 3352 performs the allocation stage 3308 and renaming stage 3310; 4) the scheduler unit(s) circuitry 3356 performs the schedule stage 3312; 5) the physical register file(s) unit(s) circuitry 3358 and the memory unit circuitry 3370 perform the register read/memory read stage 3314; the execution cluster 3360 perform the execute stage 3316; 6) the memory unit circuitry 3370 and the physical register file(s) unit(s) circuitry 3358 perform the write back/memory write stage 3318; 7) various units (unit circuitry) may be involved in the exception handling stage 3322; and 8) the retirement unit circuitry 3354 and the physical register file(s) unit(s) circuitry 3358 perform the commit stage 3324.

**FIG. 33(B)** shows processor core 3390 including front-end unit circuitry 3330 coupled to an execution engine unit circuitry 3350, and both are coupled to a memory unit circuitry 3370. The core 3390 may be a reduced instruction set computing (RISC) core, a complex instruction set computing (CISC) core, a very long instruction word (VLIW) core, or a hybrid or alternative core type. As yet another option, the core 3390 may be a special-purpose core, such as, for example, a network or communication core, compression engine, coprocessor core, general purpose computing graphics processing unit (GPGPU) core, graphics core, or the like.

The front end unit circuitry 3330 may include branch prediction unit circuitry 3332 coupled to an instruction cache unit circuitry 3334, which is coupled to an instruction translation lookaside buffer (TLB) 3336, which is coupled to instruction fetch unit circuitry 3338, which is coupled to decode unit circuitry 3340. In one embodiment, the instruction cache unit circuitry 3334 is included in the memory unit circuitry 3370 rather than the front-end unit circuitry 3330. The decode unit circuitry 3340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 3340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 3340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 3390 includes a microcode ROM (not shown) or other medium that stores microcode for certain macroinstructions (e.g., in decode unit circuitry 3340 or otherwise within the front end unit circuitry 3330). In one embodiment, the decode unit circuitry 3340 includes a micro-operation (micro-op) or operation cache (not shown) to hold/cache decoded operations, micro-tags, or micro-operations generated during the decode or other stages of the processor pipeline 3300. The decode unit circuitry 3340 may be coupled to rename/allocator unit circuitry 3352 in the execution engine unit circuitry 3350.

The execution engine circuitry 3350 includes the rename/allocator unit circuitry 3352 coupled to a retirement unit circuitry 3354 and a set of one or more scheduler(s) circuitry 3356. The scheduler(s) circuitry 3356 represents any number of different schedulers, including reservations stations, central instruction window, etc. In some embodiments, the scheduler(s) circuitry 3356 can include arithmetic logic unit (ALU) scheduler/scheduling circuitry, ALU queues, arithmetic generation unit (AGU) scheduler/scheduling circuitry, AGU queues, etc. The scheduler(s) circuitry 3356 is coupled to the physical register file(s) circuitry 3358. Each of the physical register file(s) circuitry 3358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 3358 includes vector registers unit circuitry, writemask registers unit circuitry, and scalar register unit circuitry. These register units may provide architectural vector registers, vector mask registers, general-purpose registers, etc. The physical register file(s) unit(s) circuitry 3358 is overlapped by the retirement unit circuitry 3354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 3354 and the physical register file(s) circuitry 3358 are coupled to the execution cluster(s) 3360. The execution cluster(s) 3360 includes a set of one or more execution units circuitry 3362 and a set of one or more memory access circuitry 3364. The execution units circuitry 3362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 3356, physical register file(s) unit(s) circuitry 3358, and execution cluster(s) 3360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 3364). It should also be understood that where separate pipelines are used, one or more of these pipelines may be out-of-order issue/execution and the rest in-order.

In some embodiments, the execution engine unit circuitry 3350 may perform load store unit (LSU) address/data pipelining to an Advanced Microcontroller Bus (AHB) interface (not shown), and address phase and writeback, data phase load, store, and branches.

The set of memory access circuitry 3364 is coupled to the memory unit circuitry 3370, which includes data TLB unit circuitry 3372 coupled to a data cache circuitry 3374 coupled to a level 2 (L2) cache circuitry 3376. In one exemplary embodiment, the memory access units circuitry 3364 may include a load unit circuitry, a store address unit circuit, and a store data unit circuitry, each of which is coupled to the data TLB circuitry 3372 in the memory unit circuitry 3370. The instruction cache circuitry 3334 is further coupled to a level 2 (L2) cache unit circuitry 3376 in the memory unit circuitry 3370. In one embodiment, the instruction cache 3334 and the data cache 3374 are combined into a single instruction and data cache (not shown) in L2 cache unit circuitry 3376, a level 3 (L3) cache unit circuitry (not shown), and/or main memory. The L2 cache unit circuitry 3376 is coupled to one or more other levels of cache and eventually to a main memory.

The core 3390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 3390 includes logic to support a packed data instruction set extension (e.g., AVX1, AVX2), thereby allowing the operations used by many multimedia applications to be performed using packed data.

### Exemplary Execution Unit(s) Circuitry

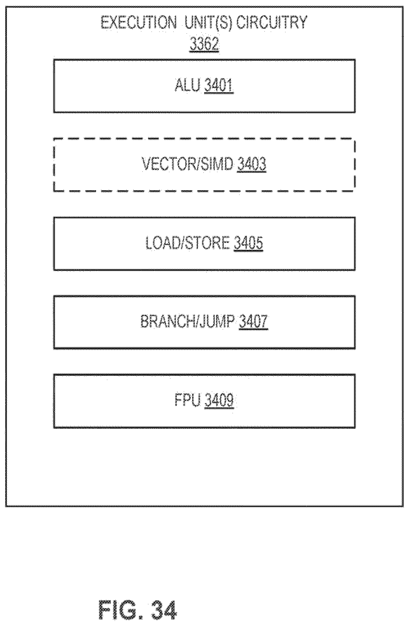

**FIG. 34** illustrates embodiments of execution unit(s) circuitry, such as execution unit(s) circuitry 3362 of FIG. 33(B). As illustrated, execution unit(s) circuity 3362 may include one or more ALU circuits 3401, vector/SIMD unit circuits 3403, load/store unit circuits 3405, and/or branch/jump unit circuits 3407. ALU circuits 3401 perform integer arithmetic and/or Boolean operations. Vector/SIMD unit circuits 3403 perform vector/SIMD operations on packed data (such as SIMD/vector registers). Load/store unit circuits 3405 execute load and store instructions to load data from memory into registers or store from registers to memory. Load/store unit circuits 3405 may also generate addresses. Branch/jump unit circuits 3407 cause a branch or jump to a memory address depending on the instruction. Floating-point unit (FPU) circuits 3409 perform floating-point arithmetic. The width of the execution unit(s) circuitry 3362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

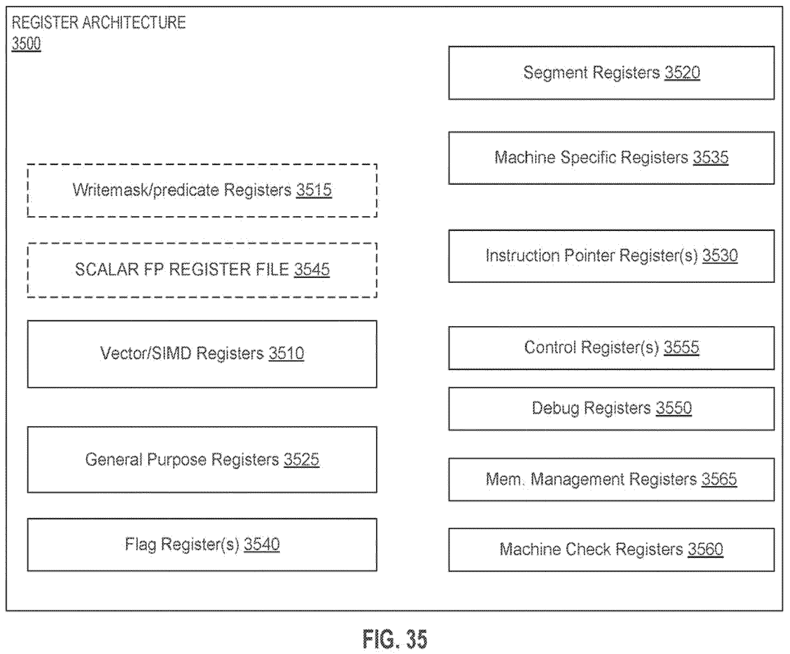

**FIG. 35** is a block diagram of a register architecture 3500 according to some embodiments. As illustrated, there are vector/SIMD registers 3510 that vary from 128-bit to 1,024 bits width. In some embodiments, the vector/SIMD registers 3510 are physically 512-bits and, depending upon the mapping, only some of the lower bits are used. For example, in some embodiments, the vector/SIMD registers 3510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 3500 includes writemask/predicate registers 3515. For example, in some embodiments, there are 8 writemask/predicate registers (sometimes called k0 through k7) that are each 16-bit, 32-bit, 64-bit, or 128-bit in size. Writemask/predicate registers 3515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 3515 corresponds to a data element position of the destination. In other embodiments, the writemask/predicate registers 3515 are scalable and consists of a set number of enable bits for a given vector element (e.g., 8 enable bits per 64-bit vector element).

The register architecture 3500 includes a plurality of general-purpose registers 3525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 3500 includes scalar floating-point register 3545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 3540 (e.g., EFLAGS, RFLAGS, etc.) store status and control information for arithmetic, compare, and system operations. For example, the one or more flag registers 3540 may store condition code information such as carry, parity, auxiliary carry, zero, sign, and overflow. In some embodiments, the one or more flag registers 3540 are called program status and control registers.

Segment registers 3520 contain segment points for use in accessing memory. In some embodiments, these registers are referenced by the names CS, DS, SS, ES, FS, and GS.

Machine specific registers (MSRs) 3535 control and report on processor performance. Most MSRs 3535 handle system-related functions and are not accessible to an application program. Machine check registers 3560 consist of control, status, and error reporting MSRs that are used to detect and report on hardware errors.

One or more instruction pointer register(s) 3530 store an instruction pointer value. Control register(s) 3555 (e.g., CR0-CR4) determine the operating mode of a processor (e.g., processor 3170, 3180, 3138, 3115, and/or 3200) and the characteristics of a currently executing task. Debug registers 3550 control and allow for the monitoring of a processor or core's debugging operations.

Memory management registers 3565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

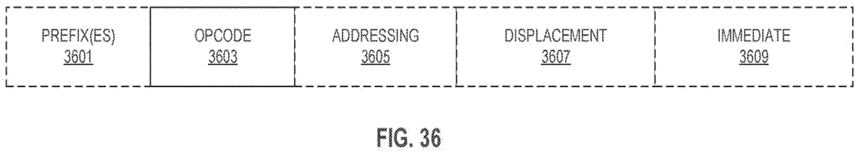

**FIG. 36** illustrates embodiments of an instruction format. As illustrated, an instruction may include multiple components including, but not limited to, one or more fields for: one or more prefixes 3601, an opcode 3603, addressing information 3605 (e.g., register identifiers, memory addressing information, etc.), a displacement value 3607, and/or an immediate 3609. Note that some instructions utilize some or all of the fields of the format whereas others may only use the field for the opcode 3603. In some embodiments, the order illustrated is the order in which these fields are to be encoded, however, it should be appreciated that in other embodiments these fields may be encoded in a different order, combined, etc.

The prefix(es) field(s) 3601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 3603 is used to at least partially define the operation to be performed upon a decoding of the instruction. In some embodiments, a primary opcode encoded in the opcode field 3603 is 1, 2, or 3 bytes in length. In other embodiments, a primary opcode can be a different length. An additional 3-bit opcode field is sometimes encoded in another field.

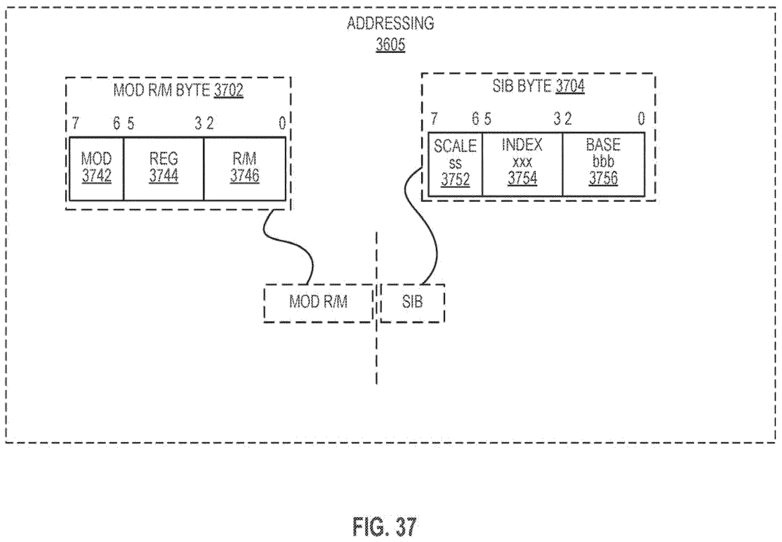

The addressing field 3605 is used to address one or more operands of the instruction, such as a location in memory or one or more registers. **FIG. 37** illustrates embodiments of the addressing field 3605. In this illustration, an optional ModR/M byte 3702 and an optional Scale, Index, Base (SIB) byte 3704 are shown. The ModR/M byte 3702 and the SIB byte 3704 are used to encode up to two operands of an instruction, each of which is a direct register or effective memory address. Note that each of these fields are optional in that not all instructions include one or more of these fields. The MOD R/M byte 3702 includes a MOD field 3742, a register field 3744, and R/M field 3746.

The content of the MOD field 3742 distinguishes between memory access and non-memory access modes. In some embodiments, when the MOD field 3742 has a value of b11, a register-direct addressing mode is utilized, and otherwise register-indirect addressing is used.

The register field 3744 may encode either the destination register operand or a source register operand, or may encode an opcode extension and not be used to encode any instruction operand. The content of register index field 3744, directly or through address generation, specifies the locations of a source or destination operand (either in a register or in memory). In some embodiments, the register field 3744 is supplemented with an additional bit from a prefix (e.g., prefix 3601) to allow for greater addressing.

The R/M field 3746 may be used to encode an instruction operand that references a memory address, or may be used to encode either the destination register operand or a source register operand. Note the R/M field 3746 may be combined with the MOD field 3742 to dictate an addressing mode in some embodiments.

The SIB byte 3704 includes a scale field 3752, an index field 3754, and a base field 3756 to be used in the generation of an address. The scale field 3752 indicates scaling factor. The index field 3754 specifies an index register to use. In some embodiments, the index field 3754 is supplemented with an additional bit from a prefix (e.g., prefix 3601) to allow for greater addressing. The base field 3756 specifies a base register to use. In some embodiments, the base field 3756 is supplemented with an additional bit from a prefix (e.g., prefix 3601) to allow for greater addressing. In practice, the content of the scale field 3752 allows for the scaling of the content of the index field 3754 for memory address generation (e.g., for address generation that uses 2^{scale *} index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 3607 provides this value. Additionally, in some embodiments, a displacement factor usage is encoded in the MOD field of the addressing field 3605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 3607.

In some embodiments, an immediate field 3609 specifies an immediate for the instruction. An immediate may be encoded as a 1-byte value, a 2-byte value, a 4-byte value, etc.

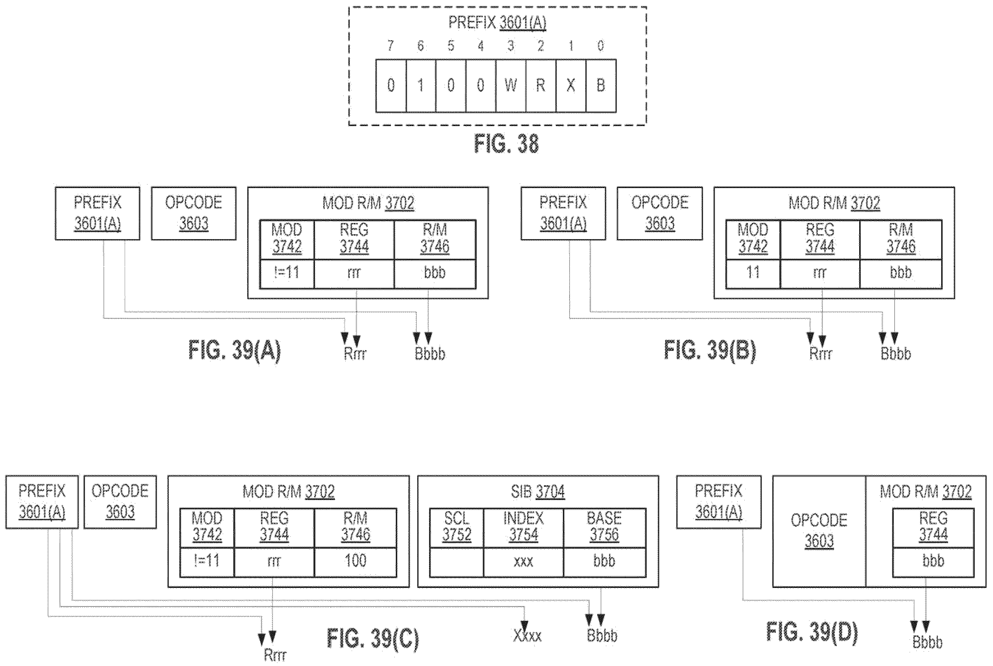

**FIG. 38** illustrates embodiments of a first prefix 3601(A). In some embodiments, the first prefix 3601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 3601(A) may specify up to three registers using 3-bit fields depending on the format: 1) using the reg field 3744 and the R/M field 3746 of the Mod R/M byte 3702; 2) using the Mod R/M byte 3702 with the SIB byte 3704 including using the reg field 3744 and the base field 3756 and index field 3754; or 3) using the register field of an opcode.

In the first prefix 3601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 3744 and MOD R/M R/M field 3746 alone can each only address 8 registers.

In the first prefix 3601(A), bit position 2 (R) may an extension of the MOD R/M reg field 3744 and may be used to modify the ModR/M reg field 3744 when that field encodes a general purpose register, a 64-bit packed data register (e.g., a SSE register), or a control or debug register. R is ignored when Mod R/M byte 3702 specifies other registers or defines an extended opcode.

Bit position 1 (X) X bit may modify the SIB byte index field 3754.

Bit position B (B) B may modify the base in the Mod R/M R/M field 3746 or the SIB byte base field 3756; or it may modify the opcode register field used for accessing general purpose registers (e.g., general purpose registers 3525).

**FIGS. 39(A)****-(D)** illustrate embodiments of how the R, X, and B fields of the first prefix 3601(A) are used. **FIG. 39(A)** illustrates R and B from the first prefix 3601(A) being used to extend the reg field 3744 and R/M field 3746 of the MOD R/M byte 3702 when the SIB byte 37 04 is not used for memory addressing. **FIG. 39(B)** illustrates R and B from the first prefix 3601(A) being used to extend the reg field 3744 and R/M field 3746 of the MOD R/M byte 3702 when the SIB byte 37 04 is not used (register-register addressing). **FIG. 39(C)** illustrates R, X, and B from the first prefix 3601(A) being used to extend the reg field 3744 of the MOD R/M byte 3702 and the index field 3754 and base field 3756 when the SIB byte 37 04 being used for memory addressing. **FIG. 39(D)** illustrates B from the first prefix 3601(A) being used to extend the reg field 3744 of the MOD R/M byte 3702 when a register is encoded in the opcode 3603.

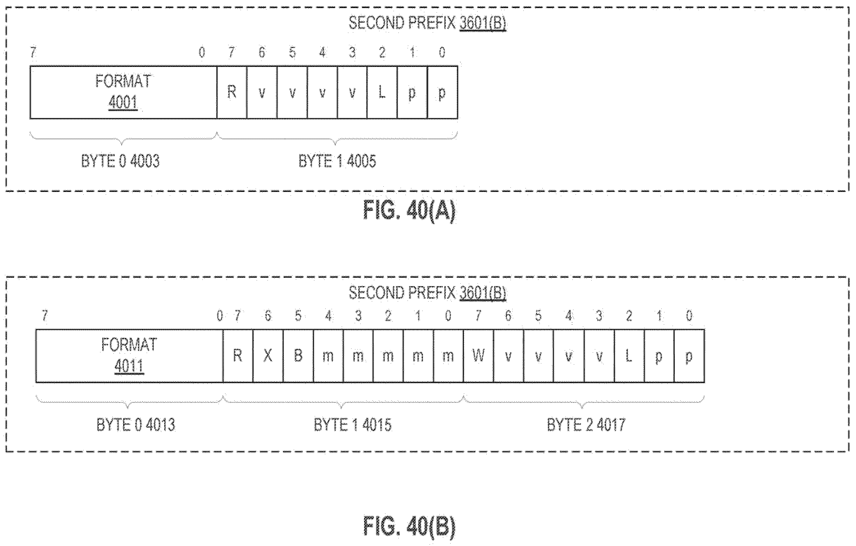

**FIGS. 40(A)****-(B)** illustrate embodiments of a second prefix 3601(B). In some embodiments, the second prefix 3601(B) is an embodiment of a VEX prefix. The second prefix 3601(B) encoding allows instructions to have more than two operands, and allows SIMD vector registers (e.g., vector/SIMD registers 3510) to be longer than 64-bits (e.g., 128-bit and 256-bit). The use of the second prefix 3601(B) provides for three-operand (or more) syntax. For example, previous two-operand instructions performed operations such as A = A + B, which overwrites a source operand. The use of the second prefix 3601(B) enables operands to perform nondestructive operations such as A = B + C.

In some embodiments, the second prefix 3601(B) comes in two forms - a two-byte form and a three-byte form. The two-byte second prefix 3601(B) is used mainly for 128-bit, scalar, and some 256-bit instructions; while the three-byte second prefix 3601(B) provides a compact replacement of the first prefix 3601(A) and 3-byte opcode instructions.

**FIG. 40(A)** illustrates embodiments of a two-byte form of the second prefix 3601(B). In one example, a format field 4001 (byte 0 4003) contains the value C5H. In one example, byte 1 4005 includes a "R" value in bit[7]. This value is the complement of the same value of the first prefix 3601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 3746 to encode the instruction operand that references a memory address or encode either the destination register operand or a source register operand.

Instructions that use this prefix may use the Mod R/M reg field 3744 to encode either the destination register operand or a source register operand, be treated as an opcode extension and not used to encode any instruction operand.

For instruction syntax that support four operands, vvvv, the Mod R/M R/M field 3746 and the Mod R/M reg field 3744 encode three of the four operands. Bits[7:4] of the immediate 3609 are then used to encode the third source register operand.

**FIG. 40(B)** illustrates embodiments of a three-byte form of the second prefix 3601(B). in one example, a format field 4011 (byte 0 4013) contains the value C4H. Byte 1 4015 includes in bits[7:5] "R," "X," and "B" which are the complements of the same values of the first prefix 3601(A). Bits[4:0] of byte 1 4015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 4017 is used similar to W of the first prefix 3601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 3746 to encode the instruction operand that references a memory address or encode either the destination register operand or a source register operand.

Instructions that use this prefix may use the Mod R/M reg field 3744 to encode either the destination register operand or a source register operand, be treated as an opcode extension and not used to encode any instruction operand.

For instruction syntax that support four operands, vvvv, the Mod R/M R/M field 3746, and the Mod R/M reg field 3744 encode three of the four operands. Bits[7:4] of the immediate 3609 are then used to encode the third source register operand.

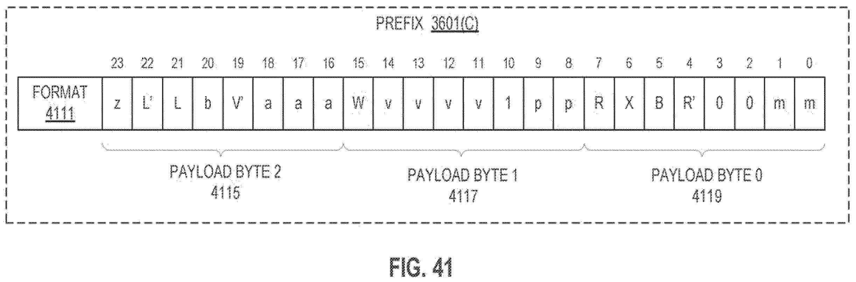

**FIG. 41** illustrates embodiments of a third prefix 3601(C). In some embodiments, the first prefix 3601(A) is an embodiment of an EVEX prefix. The third prefix 3601(C) is a four-byte prefix.

The third prefix 3601(C) can encode 32 vector registers (e.g., 128-bit, 256-bit, and 512-bit registers) in 64-bit mode. In some embodiments, instructions that utilize a writemask/opmask (see discussion of registers in a previous figure, such as **FIG. 35****)** or predication utilize this prefix. Opmask register allow for conditional processing or selection control. Opmask instructions, whose source/destination operands are opmask registers and treat the content of an opmask register as a single value, are encoded using the second prefix 3601(B).

The third prefix 3601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 3601(C) is a format field 4111 that has a value, in one example, of 62H. Subsequent bytes are referred to as payload bytes 4115-4119 and collectively form a 24-bit value of P[23:0] providing specific capability in the form of one or more fields (detailed herein).

In some embodiments, P[1:0] of payload byte 4119 are identical to the low two mmmmm bits. P[3:2] are reserved in some embodiments. Bit P[4] (R') allows access to the high 16 vector register set when combined with P[7] and the ModR/M reg field 3744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 3744 and ModR/M R/M field 3746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 3601(A) and second prefix 3611(B) and may serve as an opcode extension bit or operand size promotion.

P[18:16] specify the index of a register in the opmask (writemask) registers (e.g., writemask/predicate registers 3515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 3601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

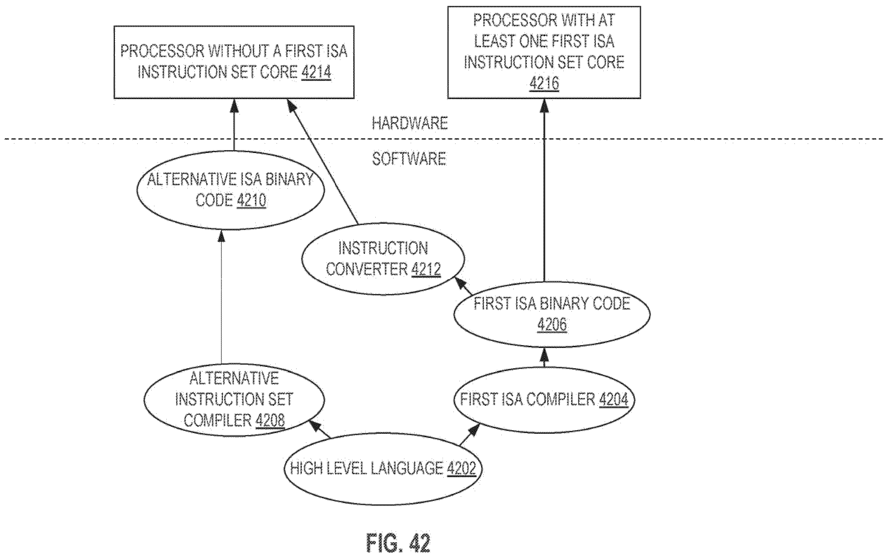

**FIG. 42** illustrates a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **FIG. 42** shows a program in a high level language 4202 may be compiled using a first ISA compiler 4204 to generate first ISA binary code 4206 that may be natively executed by a processor with at least one first instruction set core 4216. The processor with at least one first ISA instruction set core 4216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 4204 represents a compiler that is operable to generate first ISA binary code 4206 (e.g., object code) that can, with or without additional linkage processing, be executed on the processor with at least one first ISA instruction set core 4216. Similarly, **FIG. 42** shows the program in the high level language 4202 may be compiled using an alternative instruction set compiler 4208 to generate alternative instruction set binary code 4210 that may be natively executed by a processor without a first ISA instruction set core 4214. The instruction converter 4212 is used to convert the first ISA binary code 4206 into code that may be natively executed by the processor without a first ISA instruction set core 4214. This converted code is not likely to be the same as the alternative instruction set binary code 4210 because an instruction converter capable of this is difficult to make; however, the converted code will accomplish the general operation and be made up of instructions from the alternative instruction set. Thus, the instruction converter 4212 represents software, firmware, hardware, or a combination thereof that, through emulation, simulation or any other process, allows a processor or other electronic device that does not have a first ISA instruction set processor or core to execute the first ISA binary code 4206.

References to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Moreover, in the various embodiments described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given embodiment requires at least one of A, at least one of B, or at least one of C to each be present.

## Claims

1. An apparatus comprising:
decode means (3005) to decode an instance of a single instruction having one or more fields for an opcode, one or more fields to identify a source/destination matrix operand, one or more fields to identify a first plurality of source matrix operands (2101, 2103), wherein elements of the first plurality of source matrix operands (2101, 2103) are in an 8-bit integer format, one or more fields to identify a second plurality of matrix operands (2105, 2107), wherein the opcode is to indicate that execution means (2111, 3009) is to select a proper subset of data elements from the first plurality of source matrix operands (2101, 2103) based on sparsity controls from a first matrix operand of the second plurality (2105, 2107)of matrix operands, wherein the sparsity controls are to select four data elements from the first plurality of source matrix operands (2101, 2103) per row, for each element position of the source/destination matrix operand, convert pairs of elements, as selected, from a row of the first source matrix operands and pairs of elements from a column of one of the second source matrix operands to FP32, multiply converted even elements from the two specified source matrix operands to generate a first product and separately multiply converted odd elements from the specified source matrix operands to generate second product, and accumulate the first and second products with previous contents of the source/destination matrix operand; and
execution means (2111, 3009) to respond to the decoded instruction as specified by the opcode.

2. The apparatus of claim 1, wherein the opcode is to further indicate the execution means (2111, 3009) is to zero rows of the source/destination matrix that are not involved in the accumulation.

3. A method comprising:
decoding (2503) an instance of a single instruction having one or more fields for an opcode, one or more fields to identify a source/destination matrix operand, one or more fields to identify a first plurality of source matrix operands (2101, 2103), wherein elements of the first plurality of source matrix operands (2101, 2103) are in an 8-bit integer format one or more fields to identify a second plurality of matrix operands (2105, 2107), wherein the opcode is to indicate that execution circuitry (2111, 3009) is to select a proper subset of data elements from the first plurality of source matrix operands based on sparsity controls from a first matrix operand of the second plurality of matrix operands, wherein the sparsity controls are to select four data elements from the first plurality of source matrix operands (2101, 2103) per row, for each element position of the source/destination matrix operand, convert pairs of elements, as selected, from a row of the first source matrix operands and pairs of elements from a column of one of the second source matrix operands to FP32, multiply converted even elements from the two specified source matrix operands to generate a first product and separately multiply converted odd elements from the specified source matrix operands to generate second product, and accumulate the first and second products with previous contents of the source/destination matrix operand; and
executing (2507) the decoded single instruction according to the opcode.

4. A computer program comprising instructions which, when the program is executed by an apparatus according to claims 1-2, cause the apparatus to carry out the method as claimed in claim 3.

## Patentansprüche

1. Einrichtung, umfassend:
Decodiermittel (3005) zum Decodieren einer Instanz einer einzelnen Anweisung mit einem oder mehreren Feldern für einen Opcode, einem oder mehreren Feldern zum Identifizieren eines Quell-/Zielmatrixoperanden, einem oder mehreren Feldern zum Identifizieren einer ersten Mehrzahl von Quellmatrixoperanden (2101, 2103), wobei Elemente der ersten Mehrzahl von Quellmatrixoperanden (2101, 2103) in einem 8-Bit-Ganzzahlformat vorliegen, einem oder mehreren Feldern zum Identifizieren einer zweiten Mehrzahl von Matrixoperanden (2105, 2107), wobei der Opcode angeben soll, dass ein Ausführungsmittel (2111, 3009) eine echte Teilmenge von Datenelementen aus der ersten Mehrzahl von Quellmatrixoperanden (2101, 2103) basierend auf Sparsity-Steuerungen von einem ersten Matrixoperanden der zweiten Mehrzahl (2105, 2107) von Matrixoperanden auswählen soll, wobei die Sparsity-Steuerungen vier Datenelemente aus der ersten Mehrzahl von Quellematrixoperanden (2101, 2103) pro Zeile auswählen sollen, für jede Elementposition des Quell-/Zielmatrixoperanden, Paare von Elementen, wie ausgewählt, aus einer Zeile der ersten Quellmatrixoperanden und Paare von Elementen aus einer Spalte von einem der zweiten Quellmatrixoperanden in FP32 umwandeln sollen, umgewandelte geradzahlige Elemente von den beiden spezifizierten Quellmatrixoperanden multiplizieren sollen, um ein erstes Produkt zu erzeugen, und separat umgewandelte ungeradzahlige Elemente von den spezifizierten Quellmatrixoperanden multiplizieren sollen, um ein zweites Produkt zu erzeugen, und das erste und zweite Produkt mit vorherigen Inhalten des Quell-/Zielmatrixoperanden akkumulieren sollen; und
Ausführungsmittel (2111, 3009) zum Reagieren auf die decodierte Anweisung, wie durch den Opcode spezifiziert.

2. Einrichtung nach Anspruch 1, wobei der Opcode ferner angeben soll, dass das Ausführungsmittel (2111, 3009) Zeilen der Quell-/Zielmatrix, die nicht bei der Akkumulation beteiligt sind, nullen soll.

3. Verfahren, umfassend:
Decodieren (2503) einer Instanz einer einzelnen Anweisung mit einem oder mehreren Feldern für einen Opcode, einem oder mehreren Feldern zum Identifizieren eines Quell-/Zielmatrixoperanden, einem oder mehreren Feldern zum Identifizieren einer ersten Mehrzahl von Quellmatrixoperanden (2101, 2103), wobei Elemente der ersten Mehrzahl von Quellmatrixoperanden (2101, 2103) in einem 8-Bit-Ganzzahlformat vorliegen, einem oder mehreren Feldern zum Identifizieren einer zweiten Mehrzahl von Matrixoperanden (2105, 2107), wobei der Opcode angeben soll, dass eine Ausführungsschaltungsanordnung (2111, 3009) eine echte Teilmenge von Datenelementen aus der ersten Mehrzahl von Quellmatrixoperanden basierend auf Sparsity-Steuerungen von einem ersten Matrixoperanden der zweiten Mehrzahl von Matrixoperanden auswählen soll, wobei die Sparsity-Steuerungen vier Datenelemente aus der ersten Mehrzahl von Quellematrixoperanden (2101, 2103) pro Zeile auswählen sollen, für jede Elementposition des Quell-/Zielmatrixoperanden, Paare von Elementen, wie ausgewählt, aus einer Zeile der ersten Quellmatrixoperanden und Paare von Elementen aus einer Spalte von einem der zweiten Quellmatrixoperanden in FP32 umwandeln sollen, umgewandelte geradzahlige Elemente von den beiden spezifizierten Quellmatrixoperanden multiplizieren sollen, um ein erstes Produkt zu erzeugen, und separat umgewandelte ungeradzahlige Elemente von den spezifizierten Quellmatrixoperanden multiplizieren sollen, um ein zweites Produkt zu erzeugen, und das erste und zweite Produkt mit vorherigen Inhalten des Quell-/Zielmatrixoperanden akkumulieren sollen; und
Ausführen (2507) der decodierten einzelnen Anweisung gemäß dem Opcode.

4. Computerprogramm, das Anweisungen umfasst, die, wenn das Programm von einer Einrichtung nach den Ansprüchen 1-2 ausgeführt wird, die Einrichtung veranlassen, das Verfahren nach Anspruch 3 auszuführen.

## Revendications

1. Appareil comprenant :
des moyens de décodage (3005) pour décoder une instance d'une instruction unique comportant un ou plusieurs champs pour un code d'opération, un ou plusieurs champs pour identifier un opérande matriciel source/de destination, un ou plusieurs champs pour identifier une première pluralité d'opérandes matriciels source (2101, 2103), où les éléments de la première pluralité d'opérandes matriciels source (2101, 2103) sont dans un format entier de 8 bits, un ou plusieurs champs pour identifier une deuxième pluralité d'opérandes matriciels (2105, 2107), où le code d'opération indique que les moyens d'exécution (2111, 3009) doivent sélectionner un sous-ensemble approprié d'éléments de données parmi la première pluralité d'opérandes matriciels source (2101, 2103) sur la base de contrôles de dispersion provenant d'un premier opérande matriciel de la deuxième pluralité (2105, 2107) d'opérandes matriciels, où les contrôles de dispersion sont destinés à sélectionner quatre éléments de données parmi la première pluralité d'opérandes matriciels source (2101, 2103) par ligne, pour chaque position d'élément de l'opérande matriciel source/de destination, à convertir des paires d'éléments, telles que sélectionnées, d'une ligne des premiers opérandes matriciels source et des paires d'éléments d'une colonne de l'un des deuxièmes opérandes matriciels source en FP32, multiplier les éléments pairs convertis provenant des deux opérandes matriciels source spécifiés afin de générer un premier produit et multiplier séparément les éléments impairs convertis provenant des opérandes matriciels source spécifiés afin de générer un deuxième produit, et accumuler les premier et deuxième produits avec les contenus précédents de l'opérande matriciel source/de destination ; et
des moyens d'exécution (2111, 3009) pour répondre à l'instruction décodée comme spécifié par le code d'opération.

2. Appareil selon la revendication 1, dans lequel le code d'opération est destiné à indiquer en outre que les moyens d'exécution (2111, 3009) doivent mettre à zéro les lignes de la matrice source/de destination qui ne sont pas impliquées dans l'accumulation.

3. Procédé comprenant les étapes suivantes :
décoder (2503) une instance d'une instruction unique comportant un ou plusieurs champs pour un code d'opération, un ou plusieurs champs pour identifier un opérande matriciel source/de destination, un ou plusieurs champs pour identifier une première pluralité d'opérandes matriciels source (2101, 2103), où les éléments de la première pluralité d'opérandes matriciels source (2101, 2103) sont dans un format entier de 8 bits, un ou plusieurs champs pour identifier une deuxième pluralité d'opérandes matriciels (2105, 2107), où le code d'opération indique que les circuits d'exécution (2111, 3009) doivent sélectionner un sous-ensemble approprié d'éléments de données parmi la première pluralité d'opérandes matriciels source sur la base de contrôles de dispersion provenant d'un premier opérande matriciel de la deuxième pluralité d'opérandes matriciels, où les contrôles de dispersion doivent sélectionner quatre éléments de données parmi la première pluralité d'opérandes matriciels source (2101, 2103) par ligne, pour chaque position d'élément de l'opérande matriciel source/de destination, convertir des paires d'éléments, tels que sélectionnés, à partir d'une ligne des premiers opérandes matriciels source et des paires d'éléments à partir d'une colonne de l'un des deuxièmes opérandes matriciels source en FP32, multiplier les éléments pairs convertis provenant des deux opérandes matriciels source spécifiés pour générer un premier produit et multiplier séparément les éléments impairs convertis provenant des opérandes matriciels source spécifiés pour générer un deuxième produit, et accumuler les premier et deuxième produits avec les contenus précédents de l'opérande matriciel source/de destination ; et
exécuter (2507) l'instruction unique décodée conformément au code d'opération.

4. Programme informatique comprenant des instructions qui, lorsque le programme est exécuté par un appareil selon les revendications 1 et 2, amènent l'appareil à mettre en œuvre le procédé selon la revendication 3.
